# EUROPEAN PATENT APPLICATION

(11) **EP 4 664 987 A1**
(43) Date of publication of application: **17.12.2025**
(21) Application number: 24769688.3
(22) Date of filing: 04.02.2024
(51) Int. Cl.: H04W 28/06, H04B 1/401

(54) **COMMUNICATION METHOD AND COMMUNICATION APPARATUS**

(30) Priority: 10.03.2023 CN 202310260623; 08.09.2023 CN 202311167987
(71) Applicant: Huawei Technologies Co., Ltd., Shenzhen, Guangdong 518129 (CN)
(72) Inventor: RUAN, Wei, Shenzhen, Guangdong 518129 (CN); LI, Yunbo, Shenzhen, Guangdong 518129 (CN); MA, Yunsi, Shenzhen, Guangdong 518129 (CN); YU, Jian, Shenzhen, Guangdong 518129 (CN)
(74) Representative: Goddar, Heinz J.
(86) International application number: PCT/CN2024/075849
(87) International publication number: WO 2024/187992

(57) **Abstract**

This application provides a communication method and a communication apparatus. The method includes: A STA sends a first frame to an AP. The first frame includes first information, and the first information indicates that a first operation mode OM has been switched to. The STA transmits a second frame in the first OM. In this way, the AP and the STA can reach a consensus on that the STA has switched to the first OM. This avoids a case in which a communication frame cannot be correctly transmitted because no consensus is reached, improves switching flexibility, reduces a resource waste, and improves communication reliability.

## Description

This application claims priorities to Chinese Patent Application No. 202310260623.1, filed with the China National Intellectual Property Administration on March 10, 2023 and entitled "COMMUNICATION METHOD AND COMMUNICATION APPARATUS", and to Chinese Patent Application No. 202311167987.1, filed with the China National Intellectual Property Administration on September 8, 2023 and entitled "COMMUNICATION METHOD AND COMMUNICATION APPARATUS", both of which are incorporated herein by reference in their entireties.

### TECHNICAL FIELD

This application relates to the communication field, and more specifically, to a communication method and a communication apparatus.

### BACKGROUND

With development of communication technologies, high-throughput communication with a large bandwidth and a plurality of transmission streams is implemented. However, communication that supports a high throughput imposes a high requirement on hardware of a communication apparatus and consumes much power. An operation mode (operation mode, OM) switching mechanism is introduced in the 802.11 protocol. A STA may initiate OM switching to an AP on demand, to adjust a channel bandwidth and a number of transmission streams. This improves communication efficiency or reduces power consumption. However, in the current switching mechanism, switching flexibility is poor, and resource utilization is low.

### SUMMARY

Embodiments of this application provide a communication method and a communication apparatus, to improve switching flexibility, reduce a resource waste, and improve communication reliability.

According to a first aspect, a communication method is provided. The method may be performed by a communication apparatus, and the communication apparatus may be a communication device or may be a component (for example, a chip or a chip system) configured in a communication device. The following uses an example in which a STA performs the method for description.

The method includes: The station STA sends a first frame to an access point AP. The first frame includes first information, and the first information indicates that a first operation mode OM has been switched to. The STA transmits a second frame in the first OM.

Based on the foregoing solution, after completing operation mode switching, the STA notifies the AP via the first frame. After the AP receives the first frame and determines that the STA has switched to the first OM, the STA may transmit the second frame in the first OM. For example, the AP may send a communication frame (for example, a data frame or a management frame) to the STA. For example, the AP may send the communication frame to the STA after a short interframe space (short interframe space, SIFS) after the first frame, and the STA may receive the communication frame in the first OM. Therefore, the AP and the STA can reach a consensus in time on that the STA completes OM switching, to reduce a communication delay, and improve switching flexibility and communication efficiency. This can further avoid a case in which a communication frame cannot be correctly transmitted because no consensus is reached, reduce a resource waste, and improve communication reliability.

With reference to the first aspect, in some implementations of the first aspect, the STA receives a third frame from the AP. The third frame includes second information, and the second information indicates the STA to switch to the first OM.

Based on the foregoing solution, the AP may initiate OM switching of the STA on demand, and in response to OM switching initiated by the AP, the STA completes switching, and then notifies the AP. Therefore, the AP and the STA can reach a consensus on that the STA completes OM switching, a case in which a communication frame cannot be correctly transmitted because no consensus is reached can be avoided, a resource waste can be reduced, and communication reliability can be improved.

With reference to the first aspect, in some implementations of the first aspect, the third frame includes data of the STA and/or data of a STA other than the STA.

With reference to the first aspect, in some implementations of the first aspect, the second information further indicates an identifier of the STA, and/or the second information further indicates one or more of the following operation parameters of the first OM:
a channel bandwidth, a modulation and coding scheme MCS, a number of data spatial streams, or a spatial configuration.

With reference to the first aspect, in some implementations of the first aspect, the method further includes: The STA determines, based on a first field of the third frame, that the third frame includes the second information. The first field carries third information, and the third information indicates that the third frame includes the second information.

Based on the foregoing solution, a frame format of the third frame may include the first field that indicates whether the third frame includes the second information, so that the STA can determine, based on the first field, whether the third frame includes the second information; and when the second frame is included, detect the second information in the third frame; or when the second information is not included, does not detect the second information. This reduces power consumption.

With reference to the first aspect, in some implementations of the first aspect, the second information is carried in a second field of the third frame, and the third information is carried in a third field of the third frame. The second field and/or the third field is a U-SIG field or a UHR-SIG field, or the second field and/or the third field is located between a U-SIG field and a UHR-SIG field, between a UHR-SIG field and a data field, or between a non-high throughput long training field L-LTF and an ultra-high reliability long training field UHR-LTF.

With reference to the first aspect, in some implementations of the first aspect, the third frame further includes fourth information, the fourth information indicates a number N of pieces of operation mode indication OMI information included in the third frame, the second information is one of the N pieces of OMI information, and N is a positive integer.

Based on the foregoing solution, the third frame may include the fourth information that indicates the number of pieces of OMI information included in the third frame, so that the STA can detect the OMI information in the third frame based on the number N indicated by the fourth information. This can improve detection efficiency.

With reference to the first aspect, in some implementations of the first aspect, the fourth information is carried in a fourth field of the third frame, and the fourth field may be a U-SIG field or a UHR-SIG field, or the fourth field is located between a U-SIG field and a UHR-SIG field, between a UHR-SIG field and a data field, or between a non-high throughput long training field L-LTF and an ultra-high reliability long training field UHR-LTF.

With reference to the first aspect, in some implementations of the first aspect, that the STA sends the first frame to the AP includes: The STA sends a fourth frame to the AP. The fourth frame is used by the STA to acknowledge switching of an operation mode to the first OM or indicates that the third frame is correctly received. The STA switches the operation mode to the first OM. The STA sends the first frame to the AP.

Based on the foregoing solution, the STA may send, to the AP, the fourth frame used to respond to the third frame, so that the AP can determine that the STA receives the third frame, and the AP and the STA reach a consensus on that the STA performs OM switching. If the AP does not receive the fourth frame from the STA after sending the third frame, the AP may consider that the STA does not receive the third frame, and send the third frame to the STA again. This can improve OM switching flexibility and improve switching efficiency.

With reference to the first aspect, in some implementations of the first aspect, before the STA sends the first frame to the AP, the method further includes: When the third frame includes the data of the STA, after sending a fifth frame to the AP, the STA switches the operation mode to the first OM, where the fifth frame indicates whether the STA successfully receives the data of the STA included in the third frame; or when the third frame does not include the data of the STA, after obtaining the second information from the third frame, the STA switches the operation mode to the first OM.

Based on the foregoing solution, if the third frame includes the data of the STA, the STA may perform OM switching after sending the fifth frame; or if the third frame does not include the data of the STA, the STA may perform OM switching after obtaining the second information. A STA switching occasion is defined, to reduce problems such as a packet loss or unnecessary retransmission caused by switching, and improve communication efficiency.

With reference to the first aspect, in some implementations of the first aspect, the second information is carried in an aggregation control field, and the aggregation control field is located in a frame header of a media access control MAC frame included in the third frame.

With reference to the first aspect, in some implementations of the first aspect, the second information is specifically carried in a UHR OM control subfield and/or an OM control subfield in the aggregation control field.

With reference to the first aspect, in some implementations of the first aspect, the method further includes: The STA determines, based on fifth information carried in a second subfield in the aggregation control field, that the second subfield is the UHR OM control subfield. The fifth information indicates that the second subfield is the UHR OM control subfield. If the second subfield in the aggregation control field carries sixth information, the aggregation control field carrying the seventh information is an extremely high throughput EHT OM control subfield, and the sixth information indicates that the second subfield is an EHT OM control subfield.

With reference to the first aspect, in some implementations of the first aspect, the second information is carried in a first information element, and the first information element is located in a frame body of a MAC frame included in the third frame.

With reference to the first aspect, in some implementations of the first aspect, the MAC frame is an association response frame, an action frame, or a data frame including an aggregation MAC protocol data unit A-MPDU format.

With reference to the first aspect, in some implementations of the first aspect, the method further includes: The STA sends a sixth frame to the AP. The sixth frame includes seventh information, and the seventh information indicates maximum switch time for the STA to perform OM switching.

With reference to the first aspect, in some implementations of the first aspect, the method further includes: The STA sends an acknowledgment frame to the AP, where the acknowledgment frame is used to acknowledge that the third frame is received; and the STA switches to the first OM within the maximum switch time after the acknowledgment frame.

Based on the foregoing solution, it may be specified that after obtaining the third frame in which the AP notifies the STA to switch to the first OM, the STA notifies the AP via the acknowledgment frame. The AP and the STA consider by default that the STA completes switching within the maximum switch time after the acknowledgment frame, so that the AP and the STA reach a consensus on OM switching.

With reference to the first aspect, in some implementations of the first aspect, that the STA sends the first frame to the AP includes: After the maximum switch time after a start moment for performing OM switching, the STA receives a twelfth frame from the AP, where the twelfth frame indicates the STA to feed back an OM state of the STA; and the STA sends the first frame to the AP.

Based on the foregoing solution, after the maximum switch time after the start moment at which the STA performs OM switching, the AP may indicate, via the twelfth frame, the STA to feed back the OM state, to learn, based on the first frame fed back by the STA, whether the STA completes switching. When switching is completed, the AP may transmit, to the STA, data that uses the parameter of the first OM, to improve reliability of data transmission.

With reference to the first aspect, in some implementations of the first aspect, the method further includes: Before an end of the maximum switch time after a start moment for performing OM switching, the STA receives a communication frame from the AP. The communication frame includes ninth information, and the ninth information indicates that the STA is allowed to preferentially occupy a channel after transmission of the communication frame is completed. That the STA sends the first frame to the AP includes: If a moment at which transmission of the communication frame is completed is after the end of the maximum OM switch time of the STA, after transmission of the communication frame is completed, the STA sends the first frame to the AP based on the ninth information.

Based on the foregoing solution, the AP may send the communication frame including the ninth information before the end of the maximum OM switch time of the STA, so that the STA can learn that the STA can preferentially preempt the channel to transmit the first frame after transmission of the communication frame is completed. In this manner, the STA can send the first frame as early as possible, so that the AP learns, as early as possible, that the STA completes OM switching, to transmit data to the STA. This can reduce a data transmission delay.

With reference to the first aspect, in some implementations of the first aspect, the STA receives a seventh frame from the AP. The seventh frame includes eighth information, and the eighth information indicates the first OM.

With reference to the first aspect, in some implementations of the first aspect, the seventh information is carried in a second information element, and the second information element is located in a frame body of a MAC frame included in the sixth frame. The eighth information is carried in a first information element, and the first information element is located in a frame body of a MAC frame included in the seventh frame.

With reference to the first aspect, in some implementations of the first aspect, the frame body of the MAC frame included in the seventh frame further includes the second information element, and the second information element includes the seventh information.

With reference to the first aspect, in some implementations of the first aspect, the method further includes: The STA receives an eighth frame from the AP. The eighth frame is used to trigger the STA to switch to the first OM, and the eighth frame is a request to send RTS frame or a multi-user RTS frame. After sending a ninth frame to the AP, the STA switches to the first OM within the maximum switch time, where the ninth frame is used to respond to the eighth frame.

With reference to the first aspect, in some implementations of the first aspect, the method further includes: After duration of a transmission opportunity TXOP of the AP, the STA switches to a second OM.

With reference to the first aspect, in some implementations of the first aspect, the first frame includes a MAC frame used to carry the first information, and the MAC frame is an acknowledgment ACK control frame, a block acknowledgment BA control frame, or a management frame.

With reference to the first aspect, in some implementations of the first aspect, the MAC frame includes a switch token field, and the switch token field is used to identify the first frame that is used to respond to the second information in the third frame.

With reference to the first aspect, in some implementations of the first aspect, the method further includes: The STA sends capabilities information to the AP, where the capabilities information indicates that the STA supports an operation mode indication operation initiated by the AP.

According to a second aspect, a communication method is provided. The method may be performed by a communication apparatus, and the communication apparatus may be a communication device or may be a component (for example, a chip or a chip system) configured in a communication device. The following uses an example in which an AP performs the method for description.

The method includes: The access point AP receives a first frame from a station STA. The first frame includes first information, and the first information indicates that a first operation mode OM has been switched to. The AP determines, based on the first information, that the STA has switched to the first OM.

With reference to the second aspect, in some implementations of the second aspect, the method further includes: The AP sends a third frame to the STA. The third frame includes second information, and the second information indicates the STA to switch to the first OM.

With reference to the second aspect, in some implementations of the second aspect, the third frame includes data of the STA and/or data of a STA other than the STA.

With reference to the second aspect, in some implementations of the second aspect, the second information further indicates an identifier of the STA, and/or the second information further indicates one or more of the following operation parameters of the first OM:
a channel bandwidth, a modulation and coding scheme MCS, a number of data spatial streams, or a spatial configuration.

With reference to the second aspect, in some implementations of the second aspect, the third frame includes a first field, the first field carries third information, and the third information indicates that the third frame includes the second information.

With reference to the second aspect, in some implementations of the second aspect, the second information is carried in a second field of the third frame, and the third information is carried in a third field of the third frame. The second field and/or the third field is a U-SIG field or a UHR-SIG field; or the second field and/or the third field is located between a U-SIG field and a UHR-SIG field, between a UHR-SIG field and a data field, or between a non-high throughput long training field L-LTF and an ultra-high reliability long training field UHR-LTF.

With reference to the second aspect, in some implementations of the second aspect, the third frame further includes fourth information, the fourth information indicates a number N of pieces of operation mode indication OMI information included in the third frame, the second information is one of the N pieces of OMI information, and N is a positive integer.

With reference to the second aspect, in some implementations of the second aspect, the fourth information is carried in a fourth field of the third frame, and the fourth field may be a U-SIG field or a UHR-SIG field, or the fourth field is located between a U-SIG field and a UHR-SIG field, between a UHR-SIG field and a data field, or between a non-high throughput long training field L-LTF and an ultra-high reliability long training field UHR-LTF.

With reference to the second aspect, in some implementations of the second aspect, that the AP receives the first frame from the STA includes: The AP receives a fourth frame from the STA. The fourth frame is used by the STA to acknowledge switching of an operation mode to the first OM or indicates that the third frame is correctly received. The AP receives the first frame from the STA.

With reference to the second aspect, in some implementations of the second aspect, before the AP receives the first frame from the STA, the method further includes: When the third frame includes the data of the STA, the AP receives a fifth frame from the STA, where the fifth frame indicates whether the STA successfully receives the data of the STA included in the third frame.

With reference to the second aspect, in some implementations of the second aspect, the second information is carried in an aggregation control field, and the aggregation control field is located in a frame header of a media access control MAC frame included in the third frame.

With reference to the second aspect, in some implementations of the second aspect, the second information is specifically carried in a UHR OM control subfield and/or an OM control subfield in the aggregation control field.

With reference to the second aspect, in some implementations of the second aspect, a second subfield in the aggregation control field carries fifth information, and the fifth information indicates that the second subfield is a UHR OM control subfield. If the second subfield in the aggregation control field carries sixth information, the aggregation control field carrying the sixth information is an extremely high throughput EHT OM control subfield, and the sixth information indicates that the second subfield is an EHT OM control subfield.

With reference to the second aspect, in some implementations of the second aspect, the second information is carried in a first information element, and the first information element is located in a frame body of a MAC frame included in the third frame.

With reference to the second aspect, in some implementations of the second aspect, the MAC frame is an association response frame, an action frame, or a data frame including an aggregation MAC protocol data unit A-MPDU format.

With reference to the second aspect, in some implementations of the second aspect, the method further includes: The AP receives a sixth frame from the STA. The sixth frame includes seventh information, and the seventh information indicates maximum switch time for the STA to perform OM switching.

With reference to the second aspect, in some implementations of the second aspect, the method further includes: The AP receives an acknowledgment frame to the STA, where the acknowledgment frame is used to acknowledge that the third frame is received; and the AP determines that the STA switches to the first OM within the maximum switch time after the acknowledgment frame.

With reference to the second aspect, in some implementations of the second aspect, the method further includes: The AP transmits a communication frame with a STA other than the STA within the maximum switch time after the acknowledgment frame, where the communication frame includes at least one of a data frame, a management frame, or a control frame.

With reference to the second aspect, in some implementations of the second aspect, that the AP receives the first frame from the STA includes: After the maximum switch time after a start moment at which the STA performs OM switching, the AP sends a twelfth frame to the STA, where the twelfth frame indicates the STA to feed back an OM state of the STA; and the AP receives the first frame from the STA.

With reference to the second aspect, in some implementations of the second aspect, the method further includes: The AP performs clear channel assessment from a start moment at which the STA performs OM switching to an end of the maximum switch time; when the AP obtains a channel through contention by performing the clear channel assessment, the AP sends a control frame, where the control frame indicates a transmission opportunity TXOP of the AP, and the TXOP includes a time period after the maximum switch time; and after the end of the maximum switch time in the TXOP, the AP sends the communication frame to the STA in the first OM.

With reference to the second aspect, in some implementations of the second aspect, the method further includes: After a start moment at which the STA performs OM switching before the end of the maximum switch time, the AP sends a communication frame. The communication frame includes ninth information, and the ninth information indicates that the STA is allowed to preferentially occupy a channel after transmission of the communication frame is completed. That the AP receives the first frame from the station STA includes: After transmission of the communication frame is completed, the AP receives the first frame from the STA.

With reference to the second aspect, in some implementations of the second aspect, the AP sends a seventh frame to the STA. The seventh frame includes eighth information, and the eighth information indicates the first OM.

With reference to the second aspect, in some implementations of the second aspect, the seventh information is carried in a second information element, and the second information element is located in a frame body of a MAC frame included in the sixth frame. The eighth information is carried in a first information element, and the first information element is located in a frame body of a MAC frame included in the seventh frame.

With reference to the second aspect, in some implementations of the second aspect, the frame body of the MAC frame included in the seventh frame further includes the second information element, and the second information element includes the seventh information.

With reference to the second aspect, in some implementations of the second aspect, the method further includes: The AP sends an eighth frame to the STA. The eighth frame is used to trigger the STA to switch to the first OM, and the eighth frame is a request to send RTS frame or a multi-user RTS frame. The AP receives a ninth frame from the STA, where the ninth frame is used to respond to the eighth frame.

With reference to the second aspect, in some implementations of the second aspect, the method further includes: After duration of a transmission opportunity TXOP of the AP, the STA switches to a second OM.

With reference to the first aspect, in some implementations of the first aspect, the first frame includes a MAC frame used to carry the first information, and the MAC frame is an acknowledgment ACK control frame, a block acknowledgment BA control frame, or a management frame.

With reference to the second aspect, in some implementations of the second aspect, the MAC frame includes a switch token field, and the switch token field is used to identify the first frame that is used to respond to the second information in the third frame.

With reference to the second aspect, in some implementations of the second aspect, the method further includes: The AP receives capabilities information from the STA, where the capabilities information indicates that the STA supports an operation mode indication operation initiated by the AP.

According to a third aspect, a communication method is provided. The method may be performed by a communication apparatus, and the communication apparatus may be a communication device or may be a component (for example, a chip or a chip system) configured in a communication device. The following uses an example in which a second communication apparatus performs the method for description.

The method includes: The STA sends a sixth frame to an AP. The sixth frame includes seventh information, and the seventh information indicates maximum switch time for the STA to perform OM switching.

Based on the foregoing solution, the AP and the STA may perform OM negotiation, to determine an OM parameter of at least one OM and the maximum switch time for the STA to perform OM switching. After the AP triggers OM switching of the STA, the STA starts OM switching after sending a response frame, and completes switching within the maximum switch time, so that the AP and the STA can reach a consensus on time for completing switching by the STA. This can avoid a case in which a communication frame cannot be correctly transmitted because no consensus is reached, reduce a resource waste, improve communication reliability.

With reference to the third aspect, in some implementations of the third aspect, the seventh information is carried in a second information element, and the second information element is located in a frame body of a MAC frame included in the sixth frame.

With reference to the third aspect, in some implementations of the third aspect, the method further includes: The STA receives a seventh frame from the AP. The seventh frame includes eighth information, and the eighth information indicates the at least one OM.

With reference to the third aspect, in some implementations of the third aspect, the eighth information is carried in a first information element, and the first information element is located in a frame body of a MAC frame included in the seventh frame.

With reference to the third aspect, in some implementations of the third aspect, the frame body of the MAC frame included in the seventh frame further includes a second information element, and the second information element includes the seventh information.

With reference to the third aspect, in some implementations of the third aspect, the eighth information further indicates one or more of the following operation parameters of each of the at least one OM:
a channel bandwidth, a modulation and coding scheme MCS, a number of data spatial streams, or a spatial configuration.

With reference to the third aspect, in some implementations of the third aspect, the method further includes: The STA receives an eighth frame from the AP. The eighth frame is used to trigger the STA to switch to a first OM, and the eighth frame is a request to send RTS frame or a multi-user RTS frame. The STA sends a ninth frame to the AP, where the ninth frame is used to respond to the eighth frame. After sending the ninth frame, the STA switches to the first OM within the maximum switch time, where the at least one OM includes the first OM.

With reference to the third aspect, in some implementations of the third aspect, the method further includes: After duration of a transmission opportunity TXOP of the AP, the STA switches to a second OM.

According to a fourth aspect, a communication method is provided. The method may be performed by a communication apparatus, and the communication apparatus may be a communication device or may be a component (for example, a chip or a chip system) configured in a communication device. The following uses an example in which a second communication apparatus performs the method for description.

The method includes: The AP receives a sixth frame from a STA. The sixth frame includes seventh information, and the seventh information indicates maximum switch time for the STA to perform OM switching.

With reference to the fourth aspect, in some implementations of the fourth aspect, the seventh information is carried in a second information element, and the second information element is located in a frame body of a MAC frame included in the sixth frame.

With reference to the fourth aspect, in some implementations of the fourth aspect, the method further includes: The AP sends a seventh frame to the STA. The seventh frame includes eighth information, and the eighth information indicates at least one OM.

With reference to the fourth aspect, in some implementations of the fourth aspect, the eighth information is carried in a first information element, and the first information element is located in a frame body of a MAC frame included in the seventh frame.

With reference to the fourth aspect, in some implementations of the fourth aspect, the frame body of the MAC frame included in the seventh frame further includes a second information element, and the second information element includes the seventh information.

With reference to the fourth aspect, in some implementations of the fourth aspect, the eighth information further indicates one or more of the following operation parameters of each of the at least one OM:
a channel bandwidth, a modulation and coding scheme MCS, a number of data spatial streams, or a spatial configuration.

With reference to the fourth aspect, in some implementations of the fourth aspect, the method further includes: The AP sends an eighth frame to the STA. The eighth frame is used to trigger the STA to switch to a first OM, and the eighth frame is a request to send RTS frame or a multi-user RTS frame. The AP receives a ninth frame from the STA, where the ninth frame is used to respond to the eighth frame.

According to a fifth aspect, a communication apparatus is provided. In a design, the apparatus may include modules that one-to-one correspond to the method/operations/steps/actions described in the first aspect or any implementation of the first aspect. The modules may be hardware circuits, may be software, or may be implemented by using a combination of a hardware circuit and software. In a design, the apparatus includes: a processing unit, configured to generate a first frame, where the first frame includes first information, and the first information indicates that a first operation mode OM has been switched to; and a transceiver unit, configured to send the first frame to an access point AP. The transceiver unit is further configured to transmit a second frame in the first OM.

According to a sixth aspect, a communication apparatus is provided. In a design, the apparatus may include modules that one-to-one correspond to the method/operations/steps/actions described in the second aspect or any implementation of the second aspect. The modules may be hardware circuits, may be software, or may be implemented by using a combination of a hardware circuit and software. In a design, the apparatus includes: a transceiver unit, configured to receive a first frame from a station STA, where the first frame includes first information, and the first information indicates that a first operation mode OM has been switched to; and a processing unit, configured to determine, based on the first information, that the STA has switched to the first OM.

According to a seventh aspect, a communication apparatus is provided. In a design, the apparatus may include modules that one-to-one correspond to the method/operations/steps/actions described in the third aspect or any implementation of the third aspect. The modules may be hardware circuits, may be software, or may be implemented by using a combination of a hardware circuit and software. In a design, the apparatus includes: a processing unit, configured to determine a sixth frame, where the sixth frame includes seventh information, and the seventh information indicates maximum switch time for a STA to perform OM switching; and a transceiver unit, configured to send the sixth frame to an AP.

According to an eighth aspect, a communication apparatus is provided. In a design, the apparatus may include modules that one-to-one correspond to the method/operations/steps/actions described in the fourth aspect or any implementation of the fourth aspect. The modules may be hardware circuits, may be software, or may be implemented by using a combination of a hardware circuit and software. In a design, the apparatus includes: a transceiver unit, configured to receive a sixth frame from a STA, where the sixth frame includes seventh information, and the seventh information indicates maximum switch time for the STA to perform OM switching; and a processing unit, configured to determine, based on the seventh information, the maximum switch time for the STA to perform OM switching.

According to a ninth aspect, a communication apparatus is provided, and includes a processor. The processor may implement the method in any one of the first aspect to the fourth aspect or the possible implementations of the first aspect to the fourth aspect. Optionally, the communication apparatus further includes a memory. The processor is coupled to the memory, and may be configured to execute instructions in the memory, to implement the method in any one of the first aspect to the fourth aspect or the possible implementations of the first aspect to the fourth aspect. Optionally, the communication apparatus further includes a communication interface, and the processor is coupled to the communication interface. In this application, the communication interface may be a transceiver, a pin, a circuit, a bus, a module, or a communication interface of another type. This is not limited.

In an implementation, the communication apparatus is a communication device (for example, the communication device may be a terminal device or a network device). When the communication apparatus is the communication device, the communication interface may be a transceiver or an input/output interface.

In another implementation, the communication apparatus is a chip configured in the communication device. When the communication apparatus is the chip configured in the communication device, the communication interface may be an input/output interface.

Optionally, the transceiver may be a transceiver circuit. Optionally, the input/output interface may be an input/output circuit.

According to a tenth aspect, a processor is provided, and includes an input circuit, an output circuit, and a processing circuit. The processing circuit is configured to receive a signal through the input circuit, and transmit a signal through the output circuit, so that the processor performs the method in any one of the first aspect to the fourth aspect or the possible implementations of the first aspect to the fourth aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to an eleventh aspect, a computer program product is provided. The computer program product includes a computer program (also referred to as code or instructions). When the computer program is run, a computer is enabled to perform the method in any one of the first aspect to the fourth aspect or the possible implementations of the first aspect to the fourth aspect.

According to a twelfth aspect, a computer-readable storage medium is provided. The computer-readable storage medium stores a computer program (also referred to as code or instructions). When the computer program is run on a computer, the computer is enabled to perform the method in any one of the first aspect to the fourth aspect or the possible implementations of the first aspect to the fourth aspect.

According to a thirteenth aspect, a communication system is provided, and includes the at least one STA and the at least one AP in the foregoing.

### BRIEF DESCRIPTION OF DRAWINGS

FIG. 1 is a diagram of a communication system according to an embodiment of this application;
FIG. 2 is a schematic flowchart of a communication method according to an embodiment of this application;
FIG. 3, FIG. 3A, FIG. 4, FIG. 4A, and FIG. 4B are different diagrams of frame formats of a MAC frame included in a first frame according to an embodiment of this application;
FIG. 5 is another schematic flowchart of a communication method according to an embodiment of this application;
FIG. 6 to FIG. 14 are diagrams of formats of fields that carry OMI information according to an embodiment of this application;
FIG. 15 is a diagram of a format of a second information element according to an embodiment of this application;
FIG. 16 and FIG. 17 are some diagrams in which an AP initiates OM switching according to an embodiment of this application;
FIG. 17A to FIG. 17I are some other diagrams in which an AP initiates OM switching according to an embodiment of this application;
FIG. 18 is another schematic flowchart of a communication method according to an embodiment of this application;
FIG. 19 is a diagram in which a STA initiates OM switching according to an embodiment of this application;
FIG. 20 is another schematic flowchart of a communication method according to an embodiment of this application;
FIG. 21 and FIG. 22 are diagrams of performing OM switching after OM negotiation according to an embodiment of this application;
FIG. 23 is a block diagram of an example of a communication apparatus according to an embodiment of this application; and
FIG. 24 is a diagram of a structure of another example of a communication apparatus according to an embodiment of this application.

### DESCRIPTION OF EMBODIMENTS

The following describes technical solutions in this application with reference to accompanying drawings.

In embodiments of this application, "/" may indicate an "or" relationship between associated objects. For example, A/B may indicate A or B. "and/or" may indicate that there are three relationships between associated objects. For example, A and/or B may indicate the following three cases: Only A exists, both A and B exist, and only B exists, where A and B may be singular or plural. For ease of describing the technical solutions in embodiments of this application, terms such as "first" and "second" may be used for differentiation in embodiments of this application. The words such as "first" and "second" do not limit a quantity and an execution sequence, and the words such as "first" and "second" do not limit a definite difference. In embodiments of this application, the word such as "example" or "for example" is used to represent an example, evidence, or a description. Any embodiment or design solution described as "example" or "for example" should not be explained as being more preferred or having more advantages than another embodiment or design solution. A word such as "example" or "for example" is used to present a related concept in a specific manner for ease of understanding. In embodiments of this application, "at least one (type)" may alternatively be described as "one (type) or more (types)", and "a plurality of (types)" may be two (types), three (types), four (types), or more (types). This is not limited in this application.

The technical solutions provided in embodiments of this application may be applied to various communication systems, for example, a wireless local area network (wireless local area network, WLAN) system like wireless fidelity (wireless fidelity, Wi-Fi). For example, the solutions provided in embodiments of this application may be applied to a wireless local area network system that supports a next-generation Wi-Fi protocol of Institute of Electrical and Electronics Engineers (Institute of Electrical and Electronics Engineers, IEEE) 802.11ax (for example, 802.11bf, 802.11be, Wi-Fi 8, extremely high throughput (extremely high throughput, EHT), and ultra high reliability (ultra high reliability, UHR), Wi-Fi AI, or another 802.11 series protocol), and may be further applied to an ultra-wideband (ultra-wideband, UWB)-based wireless personal area network system and sensing (sensing) system. For another example, the solutions may be applied to an Internet of things (Internet of things, IoT) system, a narrow band Internet of things (narrow band Internet of things, NB-IoT) system, a long term evolution (long term evolution, LTE) system, a 5th generation (5th generation, 5G) communication system, and a new communication system emerging in future communication development.

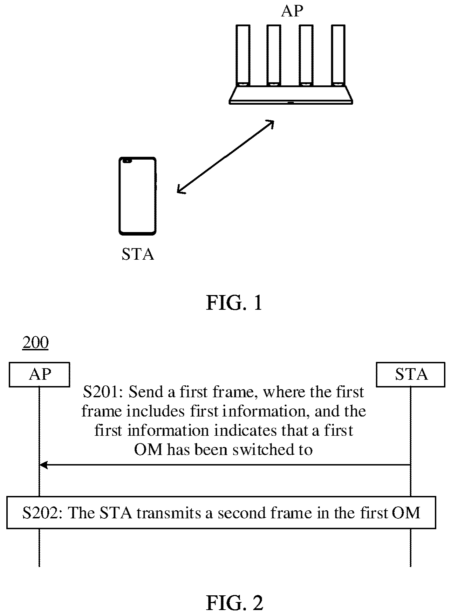

FIG. 1 is a diagram of a communication system 100 according to an embodiment of this application. The communication system 100 includes at least one network device. As shown in FIG. 1, the network device may be an access point (access point, AP). In addition, the communication system 100 may further include at least one terminal. As shown in FIG. 1, the terminal may be a station (station, STA). In the communication system 100, the AP and the STA may complete sensing measurement setup by using a sensing measurement setup process, to implement sensing measurement.

For example, the AP may be understood as an access point entity, and the STA may also be understood as a station entity. For example, this application is applicable to a scenario in which sensing measurement is performed between an AP and a STA in a WLAN. The AP and the STA may support a WLAN communication protocol, and the communication protocol may include the Institute of Electrical and Electronics Engineers (Institute of Electrical and Electronics Engineers, IEEE) 802.11 series protocols.

For example, the solutions provided in embodiments of this application may be applied to a wireless local area network system that supports 802.11 series protocols, for example, a next-generation Wi-Fi protocol of IEEE 802.11ax, such as 802.11be, Wi-Fi 7, or EHT, or for another example, a next-generation protocol of 802.11be, Wi-Fi 8, UHR, or Wi-Fi AI, and may be further applied to an ultra-wideband UWB-based wireless personal area network system or a system.

The AP provided in embodiments of this application is an apparatus with a wireless communication function, supports communication and sensing according to a WLAN protocol, and has a function of performing communication and sensing with another device (for example, a STA or another AP) in a WLAN network. It is clear that the access point may further have a function of performing communication and sensing with another device. Alternatively, the AP is equivalent to a bridge that connects a wired network and a wireless network, and is mainly used to connect wireless network clients together, and then connect the wireless network to the Ethernet. In the WLAN system, the access point may be referred to as an access point station AP STA. The apparatus with a wireless communication function may be an entire device, or may be a chip or a processing system installed in an entire device. The device in which the chip or the processing system is installed may implement a method, a function, and the like in embodiments of this application under control of the chip or the processing system. The AP in embodiments of this application is an apparatus that provides a service for the STA, and may support the 802.11 series protocols. For example, the access point may be an access point for a terminal device (for example, a mobile phone) to access a wired (or wireless) network, and may be deployed in a home, a building, and a park or may be deployed outdoors. For another example, the AP may be a communication entity like a communication server, a router, a switch, or a bridge, or the AP may include various forms of macro base stations, micro base stations, relay stations, and the like. Alternatively, the AP may be a chip or a processing system in these devices in various forms, to implement the method and function in embodiments of this application. The access point in this application may be a high efficiency (high efficient, HE) AP, an extremely high throughput EHT AP, or an access point applicable to a future Wi-Fi protocol.

The STA provided in embodiments of this application is an apparatus with a wireless communication function, supports communication ans sensing according to the WLAN protocol, and has a capability of performing communication and sensing with another station or access point in the WLAN network. In the WLAN system, the STA may be referred to as a non-access point station (non-access point station, non-AP STA). For example, the STA may communicate with another device in the WLAN by performing communication and sensing with the AP. The apparatus with a wireless communication function may be an entire device, or may be a chip or a processing system installed in an entire device. The device in which the chip or the processing system is installed may implement the method and the function in embodiments of this application under control of the chip or the processing system. For example, the station may be a wireless communication chip, a wireless sensor, or a wireless communication terminal, and may also be referred to as a user. For another example, the station may be a mobile phone that supports a Wi-Fi communication function, a tablet computer that supports a Wi-Fi communication function, a set-top box that supports a Wi-Fi communication function, a smart television that supports a Wi-Fi communication function, a smart wearable device that supports a Wi-Fi communication function, a vehicle-mounted communication device that supports a Wi-Fi communication function, or a computer that supports a Wi-Fi communication function.

With continuous evolution of WLAN application scenarios, WLAN systems are applied to more scenarios or industries, for example, the Internet of things industry and the Internet of vehicles industry. A device (for example, an AP or a STA) that supports WLAN communication and sensing may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node, a sensor, and the like in the Internet of things, an entertainment terminal (for example, an AR, a VR, or another wearable device), a smart device (for example, a printer, a projector, a loudspeaker, or a stereo) in smart office, an infrastructure (for example, a vending machine, a self-service navigation station of a supermarket, a self-service cash register device, or a self-service ordering machine) in daily life scenarios, a device in a large sports and music venue, and the like. Specific forms of the STA and the AP are not limited in embodiments of this application, and are merely examples for description herein.

In embodiments of this application, after completing OM switching, the STA notifies the AP that the STA has switched to a first OM, so that the AP determines, based on a first frame, that the STA has switched to the first OM. Therefore, the AP and the STA can reach a consensus in time on that the STA completes OM switching, to improve switching flexibility and communication efficiency. This can further avoid a case in which a communication frame cannot be correctly transmitted because no consensus is reached, reduce a resource waste, and improve communication reliability.

FIG. 2 is a schematic flowchart of a communication method 200 according to an embodiment of this application. The method includes but is not limited to the following steps.

S201: A STA sends a first frame to an AP, where the first frame includes first information, and the first information indicates that a first OM has been switched to.

Correspondingly, the AP receives the first frame from the STA, and the AP determines, based on the first information, that the STA has switched to the first OM.

The STA performs OM negotiation with the AP, to determine that the STA switches an operation mode to the first OM. The AP and the STA may determine an operation parameter of the first OM through negotiation. For example, the operation parameter of the first OM may include but is not limited to one or more parameters of a channel bandwidth, a modulation and coding scheme (modulation and coding scheme, MCS), a number of spatial streams (number of spatial streams, NSS), and a spatial configuration (spatial configuration).

The STA switches the operation mode to the first OM based on the operation parameter that is of the first OM and that is determined through negotiation with the AP. In addition, after switching to the first OM, the STA sends the first frame to the AP, to notify the AP that the STA has switched to the first OM. The AP determines, based on the first frame, that the STA has switched to the first OM. Therefore, the AP and the STA can reach a consensus on that the STA has switched to the first OM. For example, the AP may send a communication frame (for example, a data frame or a management frame) to the STA. For example, the AP may send the communication frame to the STA after a short interframe space (short interframe space, SIFS) after the first frame, and the STA may receive the communication frame in the first OM. Therefore, the AP and the STA can reach a consensus in time on that the STA completes OM switching, to reduce a communication delay, and improve switching flexibility and communication efficiency. This can further avoid a case in which a communication frame cannot be correctly transmitted because no consensus is reached, reduce a resource waste, and improve communication reliability.

In an implementation, the first frame includes a media access control (media access control, MAC) frame that indicates that the first OM has been switched to. The MAC frame may be an acknowledgment (acknowledge, ACK) control frame, a block acknowledgment (block acknowledge, BA) control frame, or a management frame.

Optionally, the MAC control frame includes a switch token (switch token) field. The switch token field is used to identify a first OM switching process.

For example, the AP initiates switching performed by the STA to the first OM. For example, the AP sends a third frame to the STA. The third frame includes second information, and the second information indicates the STA to switch to the first OM. The third frame includes a switch token field, and the switch token field is used to identify the first OM switching process, or the switch token field is used to identify the second information. After switching to the first OM, the STA sends the first frame to the AP. A MAC frame included in the first frame includes a switch token field, a value of the switch token field of the first frame is the same as a value of the switch token field of the third frame, and the value of the switch token field may be a non-zero value determined by the AP (namely, an initiator of OM switching). The switch token field of the first frame may be used to identify the first OM switching process, or used to identify the first frame that is used to respond to the second information in the third frame.

In an optional manner, the third frame sent by the AP to the STA does not include a switch token field, and the first frame sent by the STA to the AP includes a switch token field. In this case, the switch token field of the first frame is set to 0.

For another example, the STA initiates switching performed by the STA to the first OM. For example, the STA sends a tenth frame to the AP. The tenth frame includes second information, and the second information indicates that the STA is to switch to the first OM. The tenth frame includes a switch token field, and the switch token field is used to identify the first OM switching process, or the switch token field is used to identify the second information. After switching to the first OM, the STA sends the first frame to the AP. A MAC frame included in the first frame includes a switch token field, and a value of the switch token field of the first frame is the same as a value of the switch token field of the tenth frame. The value of the switch token field may be a non-zero value determined by the STA (namely, an initiator of OM switching). The switch token field of the tenth frame may be used to identify the first OM switching process, or used to identify the first frame that is used to respond to the second information in the tenth frame.

In an optional manner, the tenth frame sent by the STA to the AP does not include a switch token field, and the first frame sent by the STA to the AP includes a switch token field. In this case, the switch token field of the first frame is set to 0.

For example, the MAC frame included in the first frame is an OM indication (OM indication, OMI) ACK control frame.

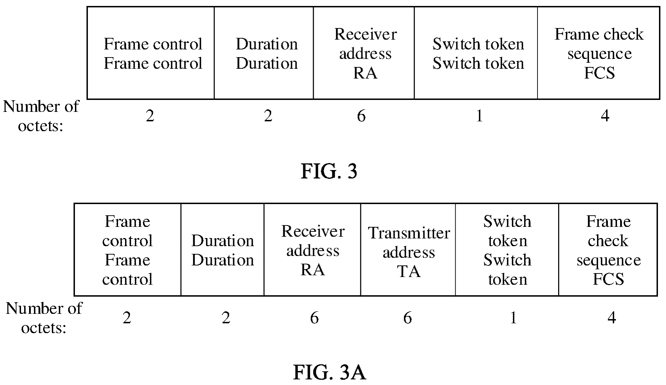

For example, a format of the OMI ACK control frame included in the first frame may be shown in FIG. 3. The OMI ACK control frame includes a switch token field. For example, a length of the switch token field may be 1 octet (octets). In addition, the OMI ACK control frame may further include a 2-octet frame control (frame control) field, a 2-octet duration (duration) field, a 6-octet receiver address (receiver address, RA) field, and a 4-octet frame check sequence (frame check sequence, FCS) field.

In an optional manner, a bit (bit, B) 3 and a B2 of a type (Type) subfield in the frame control field included in the OMI ACK control frame may be set to 01, and a B7 to a B4 of the type subfield may be set to 1111, indicating that the control frame is an OMI ACK control frame.

Optionally, the format of the OMI ACK control frame may further include a transmitter address field. For example, the format may be shown in FIG. 3A. The transmitter address field carries an address of the STA, so that the AP can determine that the OMI ACK control frame is from the STA. For formats of other fields, refer to descriptions of the example shown in FIG. 3. Details are not described.

It should be understood that formats and lengths of frames, fields, and subfields shown in this application are merely examples, and this application is not limited thereto. During specific implementation, information content and/or a length may be increased or decreased based on a specific implementation requirement. For example, the ACK control frame may further include another field or some of the foregoing fields, and a length of each field may be determined based on specific implementation. Details are not described below.

For another example, the MAC frame included in the first frame is a block acknowledgment (block acknowledge, BA) control frame.

The BA control frame included in the first frame may be referred to as an OMI BA control frame. The OMI BA control frame includes a switch token field, and the switch token field is used to identify the first OM switching process.

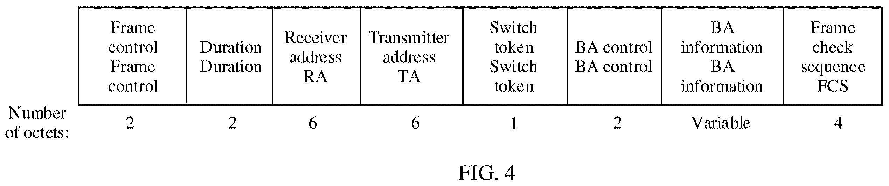

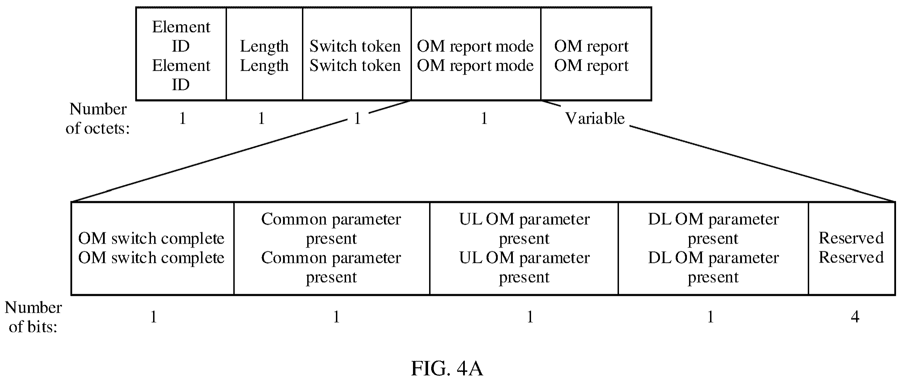

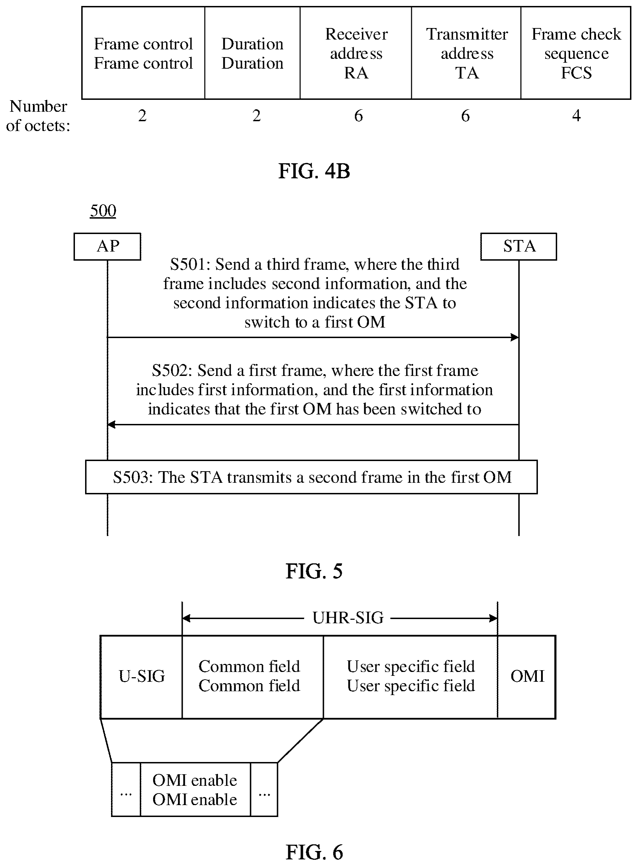

For example, a format of the BA control frame included in the first frame may be shown in FIG. 4. The BA control frame includes a 6-octet transmitter address field and a 1-octet switch token field. The AP may determine, based on the transmitter address field, that the BA control frame is from the STA. In addition, the BA control frame further includes a 2-octet frame control field, a 2-octet duration field, and a BA information field with a variable (variable) length. Formats of BA information fields of OMI BA frames of different types cannot be different. This is not limited in this application.

In an optional manner, the switch token field of the OMI BA control frame may be included in the BA information field.

For another example, the MAC frame included in the first frame is the management frame.

For example, the management frame includes an OM report (report) element, and the first information is carried in the OM report element. A format of the OM report element may be shown in FIG. 4A. The OM report element may include a 1-octet element ID field, a 1-octet length (Length) field, a 1-octet switch token field, a 1-octet OM report mode (OM report mode) field, and an OM report field with a variable number of octets. The OM report mode field includes a 1-bit OM switch complete (OM switch complete) subfield, a 1-bit common parameter present (Common Parameter Present) subfield, a 1-bit UL OM parameter present (UL OM Parameter Present) subfield, a 1-bit DL OM parameter present (DL OM Parameter Present) subfield, and a 4-bit reserved subfield. When the OM switch complete (OM switch complete) subfield is set to 1, it may indicate that the STA has completed OM switching (in this embodiment, it indicates that the first OM has been switched to). When the subfield is set to 0, it may indicate that the OM report element is used to notify the current STA of the OM parameter. The OM switch complete subfield indicates whether OM switching is completed. For example, 1 bit is set to 1 or 0, to indicate that OM switching is completed or not completed. The common parameter present subfield indicates whether a common parameter subfield is present in the OM report field, and the common parameter subfield indicates a common parameter used by a UL OM and a DL OM. The UL OM parameter present subfield indicates whether a UL OM parameter subfield is present in the OM report field, and the UL OM parameter subfield indicates a parameter used by the UL OM. The DL OM parameter present subfield indicates whether a DL OM parameter subfield is present in the OM report field. For example, the foregoing three fields may be set to 1 or 0, to respectively indicate that the three fields are present or not present. The UL OM parameter subfield indicates the parameter used by the UL OM.

It should be understood that an implementation in which the first frame includes the switch token field is an optional implementation, and the first frame may not include a switch token field. For example, neither the third frame that is sent by the AP and that is used to initiate OM switching nor the first frame (for example, specifically, the OMI ACK frame, the OMI BA frame, or the management frame included in the first frame) may include a switch token field. For another example, neither the tenth frame that is sent by the STA and that is used to initiate OM switching nor the first frame may include a switch token field.

For example, the MAC frame included in the first frame is the OMI ACK control frame. A format of the OMI ACK control frame may be shown in FIG. 4B. The format of the OMI ACK control frame does not include a switch token field. For example, the OMI ACK control frame includes a 2-octet frame control field, a 2-octet duration field, a 6-octet receiver address field, a 6-octet transmitter address field, and a 4-octet frame check sequence field. The AP may determine, based on the transmitter address field, that the OMI ACK control frame is an OMI ACK control frame that is from the STA and that indicates that the first OMI has been switched to.

S202: The STA transmits a second frame in the first OM.

The second frame may be a data frame, a management frame, or the like. This is not limited in this application.

For example, the first OM is a receive operation mode of the STA. After the STA switches to the first OM based on the operation parameter, of the first OM, obtained through negotiation with the AP, and notifies the AP via the first frame, the STA may receive the second frame in the first OM. For example, the AP sends the second frame to the STA, that is, the second frame is a downlink (downlink, DL) frame. The STA receives the second frame from the AP in the first OM.

For another example, the first OM is a transmit operation mode of the STA. After the STA switches to the first OM based on the operation parameter, of the first OM, obtained through negotiation with the AP, and notifies the AP via the first frame, the STA may send the second frame in the first OM. For example, the STA sends the second frame to the AP in the first OM, that is, the second frame is an uplink (uplink, UL) frame. The AP receives the second frame from the STA.

Based on the foregoing solution, after completing operation mode switching, the STA notifies the AP via the first frame. Therefore, the AP and the STA can reach a consensus on that the STA completes OM switching, a case in which a communication frame cannot be correctly transmitted because no consensus is reached can be avoided, a resource waste can be reduced, and communication reliability can be improved.

OM negotiation between the STA and the AP may be initiated by the AP or the STA. The following separately describes the two initiation manners.

FIG. 5 is a schematic flowchart of a communication method 500 according to an embodiment of this application. In the example shown in FIG. 5, an AP initiates OM negotiation with a STA. After negotiation, the STA performs OM switching, and notifies the AP after completing switching. The method 500 includes but is not limited to the following steps.

S501: The AP sends a third frame to the STA, where the third frame includes second information, and the second information indicates the STA to switch to a first OM.

Correspondingly, the STA receives the third frame from the AP, and the STA determines, based on the second information in the third frame, to switch to the first OM. The second information may be referred to as OMI information. However, this application is not limited thereto.

The third frame may be a downlink data frame. For example, the third frame may include data of the STA, and/or the third frame may include data of a STA other than the STA.

For example, the second information further indicates an identifier (identifier, ID) of the STA, and/or the second information further indicates an operation parameter of the first OM. The operation parameter of the first OM includes but is not limited to one or more parameters of a channel bandwidth, an MCS, an NSS, or a spatial configuration.

The second information may be physical (physical, PHY) layer information, or the second information may be MAC layer information. The following separately describes two implementations.

Manner 1: The second information is the PHY layer information, and the second information is carried in a signaling (signal, SIG) field of the third frame.

For example, the second information is carried in a second field of the third frame.

For example, the second field may be a U-SIG field or a UHR-SIG field.

For another example, the second field carrying the second information may be located between a U-SIG field and a UHR-SIG field. Alternatively, the second field may be located between a UHR-SIG field and a data field. Alternatively, the second field may be located between a non-high throughput (non-high throughput, non-HT) long training field (long training field, LTF) and a UHR-LTF field. The non-high throughput long training field may be denoted as an L-LTF or a non-HT LTF.

For example, the second field may include 22 bits in total: a bit (bit, B) 0 to a B21, and a format of the 22 bits in the second field may be as follows:

The B0 to a B10: a STA ID subfield that is set to an identifier of a target STA;
a B11 to a B13: a bandwidth (bandwidth) subfield that indicates a channel bandwidth used by the first OM;
a B14 to a B17: an MCS subfield that indicates an MCS used by the first OM; and
a B18 to the B21: an NSS/spatial configuration subfield that indicates a number of spatial streams used by the first OM, where the NSS is applicable to a number of spatial streams allocated in a non-multi-user (non-multiple user, non-MU) multiple input multiple output (multiple input multiple output, MIMO) manner, and the spatial configuration is applicable to a number of spatial streams allocated in an MU-MIMO manner.

Optionally, the STA determines, based on a first field of the third frame, that the third frame includes the second information, where the first field carries third information, and the third information indicates that the third frame includes the second information.

A frame format of the third frame includes the first field, and the first field indicates whether the third frame includes OMI information. The first field carrying the third information indicates that the third frame includes the OMI information; otherwise, it indicates that the third frame does not include the OMI information. For example, the first field may be 1 bit. The 1 bit indicates 1, to indicate that the third frame includes the OMI information. The 1 bit indicates 0, to indicate that the third frame does not include the OMI information. The first field may be referred to as an OMI enable (OMI enable) field. The STA may determine, based on the OMI enable field, whether the third frame includes the OMI information, to determine whether to continue to detect the OMI information. In the example shown in FIG. 5, after receiving the third frame from the AP, the STA may determine, based on a 1 bit indicating 1 in the OMI enable field, that the third frame includes the OMI information. The STA may further detect the OMI information in the third frame. The OMI information of the STA may be detected, namely, the second information, for example, the identifier of the STA included in the second information, so that the STA can determine that the second information is the OMI information of the STA. It should be understood that this application is not limited thereto. For example, the first field may include a plurality of bits that may indicate a plurality of types of information. One piece of information is the third information, indicating that the third frame includes the OMI information. Another piece of information indicates that the third frame does not include the OMI information. Other information is used for another purpose.

The third information may be carried in a third field of the third frame. The third field may be a U-SIG field or a UHR-SIG field. Alternatively, the third field may be located between a U-SIG field and a UHR-SIG field, between a UHR-SIG field and a data field, or between an L-LTF field and a UHR-LTF field.

For example, a format of a SIG field of the third frame shown in FIG. 6 may include a universal signaling (universal SIG, U-SIG) field and a UHR-SIG field, and the UHR-SIG field includes a common field (common field) and a user specific field (user specific field). In this example, the OMI enable field may be included in the U-SIG field or the common field included in the UHR-SIG field, that is, the third field may be the U-SIG field or the UHR-SIG field. If the third frame includes the OMI information, 1 bit of the OMI enable field indicates 1, to indicate that the third frame includes the OMI information, and the third frame includes an OMI field carrying the OMI information. In other words, the second field is the OMI field. As shown in FIG. 6, the OMI field may be located after the user specific field (user specific field), that is, between the UHR-SIG field and the data field. If the third frame does not include the OMI information, 1 bit of the OMI enable field indicates that the third frame does not include the OMI information, and the third frame may not include the OMI field.

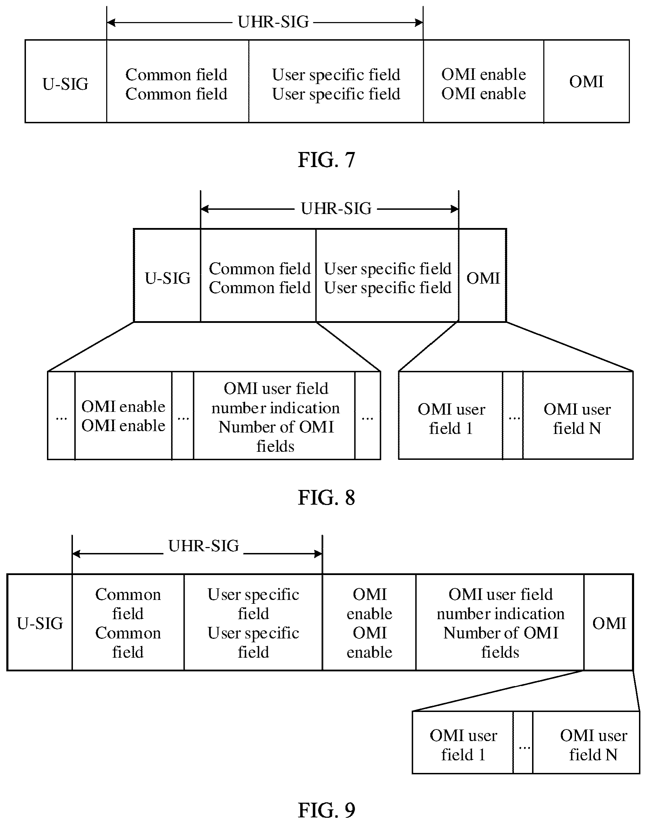

For another example, in a format of the SIG field of the third frame shown in FIG. 7, the OMI enable field and the OMI field may be sequentially located after the UHR-SIG field, that is, both the second field and the third field are located between the UHR-SIG field and the data field. The AP may notify, via the OMI enable field, the STA whether the third frame includes the OMI field.

The foregoing two examples show the implementations in which the frame format of the third frame includes the OMI enable field and the OMI field. It should be understood that this application is not limited thereto. For example, the OMI enable field and/or the OMI field may be a subfield belonging to the UHR-SIG field, or may be located at another location in the third frame.

Optionally, the third frame may include a plurality of pieces of OMI information. In this case, the third frame may further include fourth information, and the fourth information indicates a number N of pieces of OMI information included in the third frame.

When N is greater than 1, the N pieces of OMI information may include OMI information of different STAs, or the N pieces of OMI information may include different OMI information of a same STA. For example, different OMI information of the same STA may be OMs used by the STA in different time periods. However, this application is not limited thereto.

The fourth information may be carried in a fourth field of the third frame. The fourth field may be a U-SIG field or a UHR-SIG field. Alternatively, the fourth field may be located between a U-SIG field and a UHR-SIG field, between a UHR-SIG field and a data field, or between an L-LTF field and a UHR-LTF field.

A length of the fourth field is not limited in this application. For example, the fourth field may include 8 bits, and the 8 bits indicate the number N of pieces of OMI information included in the third frame. Alternatively, a number of bits of the fourth field may be determined based on specific implementation.

One piece of OMI information is carried in one OMI user field. For example, the fourth field may be referred to as an OMI user field number indication field, and the third frame includes N OMI user fields.

For example, as shown in FIG. 8, the U-SIG field and/or a common field in the UHR-SIG field in the frame format of the third frame includes an OMI enable field and the OMI user field number indication field, an OMI field may be located after a user specific field, and the OMI field includes N OMI user fields. One OMI user field carries one piece of OMI information.

For another example, as shown in FIG. 9, in the frame format of the third frame, the OMI enable field, the OMI user field number indication field, and the OMI field are sequentially located after the user specific field, one or more of the three fields may be located between the UHR-SIG field and the data field, or belong to the UHR-SIG field.

In an implementation, a frame format of the third frame may include an OMI user field number indication field and an OMI field, but does not include an OMI enable field. The AP may indicate, based on the OMI user field number indication field, whether the third frame includes an OMI user field, and a number of included OMI user fields. If the OMI user field number indication field indicates that the number N of OMI user fields of the third frame is 0, the STA may determine that the third frame does not include the OMI user field. If the OMI user field number indication field indicates that the number N of OMI user fields of the third frame is greater than 0, the STA may determine that the third frame includes the N OMI user fields.

In another implementation, the frame format of the third frame may include an OMI enable field, an OMI user field number indication field, and an OMI field. When the OMI enable field indicates that the third frame does not include OMI information, the third frame does not include the OMI user field number indication field and the OMI field, or the OMI user field number indication field of the third frame is set to 0, and the third frame does not include the OMI field.

Manner 2: The second information is the MAC layer information, and the second information is carried in a MAC frame included in the third frame.

In an implementation, the second information is carried in a frame header (frame header) of the MAC frame included in the third frame.

For example, the second information may be specifically carried in an A-control field in the frame header of the MAC frame included in the third frame.

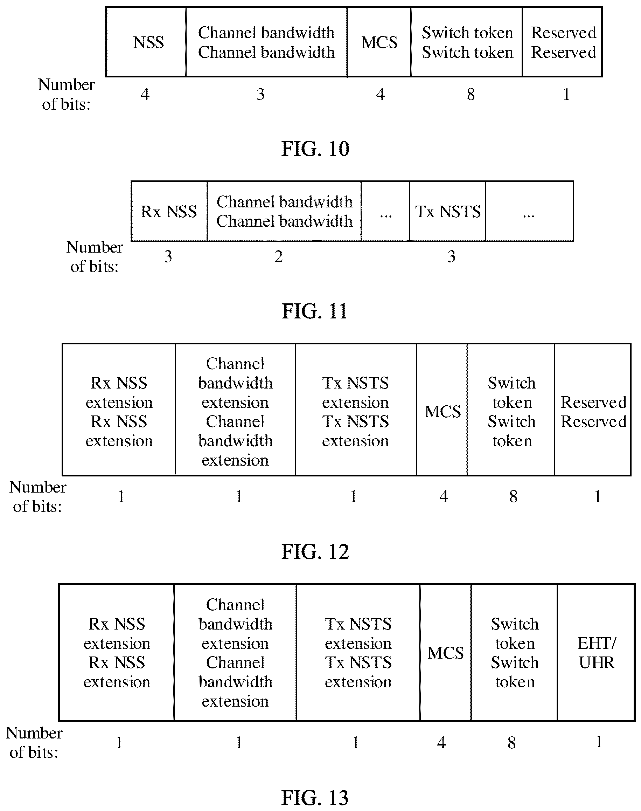

For example, the A-control field may include a UHR OM control subfield, and the UHR OM control subfield is used to carry the second information. A control ID value (control ID value) of the UHR OM control subfield in the A-control field is 10. A format of the UHR OM control subfield may be shown in FIG. 10. The UHR OM control subfield may include a 4-bit NSS subfield, a 3-bit channel bandwidth subfield, and a 4-bit MCS field. Optionally, the UHR OM control subfield may further include an 8-bit switch token field and a 1-bit reserved subfield, and the UHR OM control subfield may be 20 bits. Alternatively, if the UHR OM control subfield does not include a switch token field, that is, the format of the UHR OM control subfield does not include the 8-bit switch token field shown in FIG. 10, the UHR OM control subfield may be 12 bits. The first OM is a receive operation mode of the STA, and an operation parameter indicated in the UHR OM control subfield may be a receive operation parameter of the STA. The NSS subfield may also be a receive NSS (Rx NSS) subfield.

For another example, two fields in the A-control field jointly carry the second information. For example, the A-control field may include an OM control subfield and a UHR OM control subfield, and the two fields may jointly carry the second information. The OM control subfield carries at least 1 bit that indicates a first operation parameter, the UHR OM control subfield includes at least 1 bit of the first operation parameter, and the second information indicates that the operation parameter of the first OM includes the first operation parameter. For example, the OM control subfield in the A-control field may include a 3-bit Rx NSS subfield, a 2-bit channel bandwidth subfield, and a 1-bit transmit number of space-time streams (Tx number of spatial-time streams, Tx NSTS) subfield shown in FIG. 11. The UHR OM control subfield includes a 1-bit Rx NSS extension subfield, a 1-bit channel bandwidth extension subfield, a 1-bit Tx NSTS extension subfield, and a 4-bit MCS subfield that are shown in FIG. 12. Optionally, the UHR OM control subfield may further include an 8-bit switch token subfield and a 1-bit reserved subfield, and the UHR OM control subfield may include 16 bits. Alternatively, if the UHR OM control subfield does not include a switch token field, that is, the format of the UHR OM control subfield does not include the 8-bit switch token field shown in FIG. 12, the UHR OM control subfield may be 8 bits. In a manner, the UHR OM control field does not include a switch token subfield, but the OM control subfield includes a switch token subfield. In another manner, neither the OM control subfield nor the UHR OM control subfield includes a switch token subfield.

The Rx NSS used by the first OM is jointly indicated by 3 bits in the OM control subfield and the 1-bit Rx NSS extension subfield in the UHR OM control subfield, that is, the Rx NSS needs to be indicated by 4 bits, low 3 bits in the 4 bits are carried in the OM control subfield, and high 1 bit in the four bits is carried in the UHR OM control subfield. For example, the 3 bits in the OM control subfield are 000, and 1 bit in the Rx NSS extension subfield in the UHR OM control subfield is 1. In this case, the 4 bits indicating the NSS are 1000. For example, 1000 may indicate that the number of spatial streams used by the first OM is 8. However, this application is not limited thereto. The channel bandwidth used by the first OM is jointly indicated by 2 bits in the OM control subfield and the 1-bit channel bandwidth extension subfield in the UHR OM control subfield, a Tx NSTS used by the first OM is jointly indicated by 3 bits in the OM control subfield and the 1-bit Tx NSTS extension subfield in the UHR OM control subfield. The MCS used by the first OM may be separately indicated by 3 bits in the UHR OM control subfield. However, this application is not limited thereto.

Optionally, the OM control subfield and an EHT/UHR OM control subfield in the A-control field jointly carry the second information, and a format of the EHT/UHR OM control subfield may be shown in FIG. 13. A difference from the example shown in FIG. 12 lies in that the last bit indicates whether the field is an EHT-version OM control subfield (namely, an EHT OM control subfield) or a UHR-version OM control subfield (namely, a UHR OM control subfield). The last bit in the EHT/UHR OM control subfield is an EHT/UHR subfield, for example, the 1 bit is set to 1, indicating that the OM control subfield is an UHR-version OM control subfield, and 4 bits before the 1 bit are an MCS subfield, that is, the format shown in FIG. 13. The 1 bit is set to 0, indicating that the OM control subfield is an EHT-version OM control subfield, and 4 bits before the 1 bit are reserved bits. Bit reusing of the EHT control subfield and the UHR control subfield is implemented by using the indication of the EHT/UHR subfield. The format of the EHT/UHR OM control subfield may include a switch token field shown in FIG. 13, or may not include the switch token field. For details, refer to the foregoing descriptions of the UHR OM control field shown in FIG. 12. Details are not described herein again.

In another implementation, the second information is carried in a frame body (frame body) of the MAC frame included in the third frame.

For example, the second information may be specifically carried in a first information element in the frame body of the MAC frame included in the third frame.

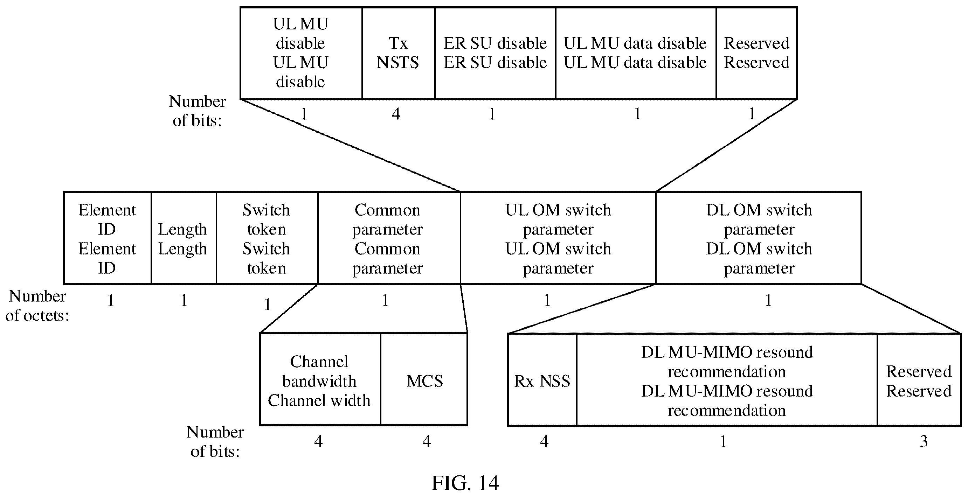

For example, the first information element may be referred to as an OM switch parameter set (OM switch parameter set) element. For example, an ID of the element may be 2 or another value. The OM switch parameter set element carries the second information, and the second information indicates the operation parameter of the first OM. A format of the first information element may be shown in FIG. 14. The first information element may include an element ID field, a length (Length) field, a common parameter (Common Parameter) field, a UL OM switch parameter field, and a DL OM switch parameter field that each are 1 octet. The common parameter field includes common parameters in a UL OM switch parameter and a DL OM switch parameter. For example, the common parameter field includes a 4-bit channel bandwidth subfield and a 4-bit MCS subfield. The UL OM switch parameter field includes a 1-bit UL MU disable subfield, a 4-bit Tx NSTS subfield, a 1-bit extended range (extended range, ER) single user (single user, SU) disable subfield (denoted as ER SU Disable), a 1-bit UL MU data disable (UL MU Data Disable) subfield, and a 1-bit reserved subfield. The DL OM switch parameter field may include an Rx NSS subfield and a 1-bit DL MU-MIMO resound recommendation (DL MU-MIMO Resound Recommendation) subfield. Optionally, the OM switch parameter set element may further include a 1-octet switch token field and a 3-bit reserved subfield.

The foregoing describes a specific implementation in which the second information may be the PHY layer information or the MAC layer information in the third frame. It should be understood that this application is not limited thereto.

In an optional implementation, the third frame further includes information that indicates maximum switch time for the STA to switch to the first OM.

The AP may further notify, via the third frame, the STA of the maximum switch time for switching to the first OM, and the STA may switch to the first OM within the maximum switch time indicated by the third frame.

A second information element in the third frame indicates the maximum switch time, and the second information element is located in the frame body of the MAC frame included in the third frame.

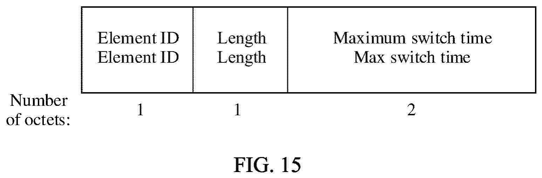

For example, the second information element may be referred to as an OM switch timing (OM switch timing) element. A format of the second information element may be shown in FIG. 15, and includes a 1-octet element ID field, a 1-octet length field, and a 2-octet maximum switch time field. After receiving the third frame, the STA may obtain the OM switch timing element from the frame body of the MAC frame included in the third frame. For example, the STA may determine, based on the element ID field, that the element is the OM switch timing element. For example, the element ID may be 4. In addition, the STA determines, based on the maximum switch time field in the OM switch timing element, the maximum switch time for the STA to switch to the first OM, and completes switching within the maximum switch time. A unit of the maximum switch time may be 100 microseconds (µs). However, this application is not limited thereto.

In an optional implementation, the STA may send a sixth frame to the AP. The sixth frame includes seventh information, and the seventh information indicates the maximum switch time for the STA to perform OM switching.

The STA may notify, via the seventh information in the sixth frames, the AP of the maximum switch time for the STA to perform OM switching, so that the AP considers the maximum switch time of the STA when initiating OM switching. For example, the seventh information is carried in a second information element included in the sixth frame, and the second information element may be the OM switch timing element shown in FIG. 15. A MAC frame including the second information element in the sixth frame may be a management frame, an action (Action) frame, or a data frame in an aggregation MAC protocol data unit (Aggregation MAC protocol data unit, A-MPDU) format.

Optionally, the third frame sent by the AP to the STA may carry the seventh information obtained by the AP from the STA.

In other words, the third frame sent by the AP to the STA includes information that indicates the maximum switch time for the STA to switch to the first OM, and the information may be the seventh information obtained by the AP from the sixth frame of the STA. Therefore, the AP and the STA reach a consensus on the maximum switch time for the STA to perform OM switching. However, this application is not limited thereto. The maximum switch time indicated by the AP via the third frame may be determined by the AP based on the seventh information.

In an optional implementation, before the AP sends the third frame to the STA, the STA may send capabilities information to the AP. The capabilities information indicates that the STA supports an OMI operation initiated by the AP (or OM negotiation initiated by the AP). Correspondingly, the AP receives the capabilities information from the STA, and determines, based on the capabilities information, that the STA supports the OMI operation (OMI operation) initiated by the AP. In this case, the AP may initiate OM negotiation when the AP needs to indicate the STA to perform OM switching. For example, the AP sends the third frame to the STA, to indicate the STA to switch to the first OM.

The capabilities information may be carried in a capabilities element. The capabilities element may be an EHT/UHR capabilities element (EHT/UHR capabilities element), or the capabilities element may be a UHR capabilities element (UHR capabilities element).

For example, the capabilities element is the EHT/UHR capabilities element. The EHT/UHR capabilities element includes EHT/UHR MAC capabilities information (EHT/UHR MAC capabilities information), the EHT/UHR MAC capabilities information may include a subfield, and the subfield indicates whether the STA supports the OMI operation initiated by the AP. For example, the subfield may be referred to as a downlink OMI support (DL OMI support) subfield. Alternatively, the subfield may specifically indicate whether the STA supports an OMI operation initiated by the AP in downlink transmission. The OMI operation initiated by the AP in downlink transmission may be referred to as a DL OMI operation. For example, as shown in Table 1, the DL OMI support subfield may be defined as indicating that the DL OMI operation is supported. For example, the subfield includes 1 bit, and a coding scheme of the subfield may be as follows: If the STA supports the DL OMI operation initiated by the AP, the 1 bit is set to 1; otherwise, the 1 bit is set to 0. However, this application is not limited thereto.

**Table 1**

| Subfield | Definition | Coding scheme |
|---|---|---|
| DL OMI support | Indicate that a DL OMI operation is supported | • If a STA supports the DL OMI operation, set to 1 |
| | | • Otherwise, set to 0 |

In this example, the AP in the embodiment shown in FIG. 5 may obtain the EHT/UHR capabilities element from the STA, and the DL OMI support subfield of the EHT/UHR MAC capabilities information included in the EHT/UHR capabilities element indicates that the STA supports the OMI operation initiated by the AP, that is, the DL OMI support subfield is set to 1. The AP determines that the STA supports the OMI operation initiated by the AP, and the AP may send the third frame to the STA.

For another example, the capabilities element is the UHR capabilities element (UHR capabilities information). The UHR capabilities element includes UHR MAC capabilities information (UHR MAC capabilities information), the UHR MAC capabilities information may include a subfield, and the subfield indicates whether the STA supports the OMI operation initiated by the AP. For example, the subfield may be referred to as a UHR OM control support (UHR OM control support) subfield. Alternatively, the subfield may specifically indicate whether the STA supports an OMI operation initiated by the AP in downlink transmission. For example, as shown in Table 2, the UHR OM control support subfield may be defined as indicating that receiving of a frame carrying the UHR OM control subfield is supported. For example, the subfield includes 1 bit, and a coding scheme of the subfield may be as follows: If a +high throughput control (high throughput control, HTC)-high efficiency (high efficiency, HE) support subfield of the STA is 1, and the STA supports receiving of the UHR OM control subfield, 1 bit included in the UHR OM control support subfield is set to 1; otherwise, the 1 bit is set to 0. If the +HTC-HE support subfield of the STA is 0, the UHR OM control support subfield is a reserved subfield.

**Table 2**

| Subfield | Definition | Coding scheme |
|---|---|---|
| UHR OM control support | Indicate that receiving of a frame carrying a UHR | If a +HTC-HE support subfield of a STA is 1, |
| | | • if the STA supports receiving of the UHR OM control subfield, set to 1; |
| | OM control subfield is supported | • otherwise, set to 0 |
| | | If the +HTC-HE support subfield of the STA is 0, the subfield is a reserved subfield |

In this example, the AP in the embodiment shown in FIG. 5 may obtain the UHR capabilities element from the STA, and the UHR OM control support subfield of the UHR MAC capabilities information included in the UHR capabilities element indicates that the STA supports receiving of the frame carrying the UHR OM control subfield, that is, the +HTC-HE support subfield of the STA is 1, and the 1 bit included in the UHR OM control support subfield is set to 1. The AP determines that the STA supports the OMI operation initiated by the AP, and the AP may send the third frame to the STA.

S502: The STA sends a first frame to the AP, where the first frame includes first information, and the first information indicates that the first OM has been switched to.

After receiving the third frame from the AP, the STA may switch to the first OM based on the indication of the second information in the third frame. After completing switching, the STA sends the first frame to the AP, so that the AP can determine that the STA has switched to the first OM after receiving the first frame.

S503: The STA transmits a second frame in the first OM.

After completing switching to the first OM and notifying the AP, the STA may transmit the second frame in the first OM.

For implementation of S502 and S503, refer to descriptions of the embodiment shown in FIG. 2. For brevity, details are not described herein again.

Based on the foregoing solution, the AP may initiate OM switching of the STA on demand, and in response to OM switching initiated by the AP, the STA completes switching, and then notifies the AP. Therefore, the AP and the STA can reach a consensus on that the STA completes OM switching, a case in which a communication frame cannot be correctly transmitted because no consensus is reached can be avoided, a resource waste can be reduced, and communication reliability can be improved.

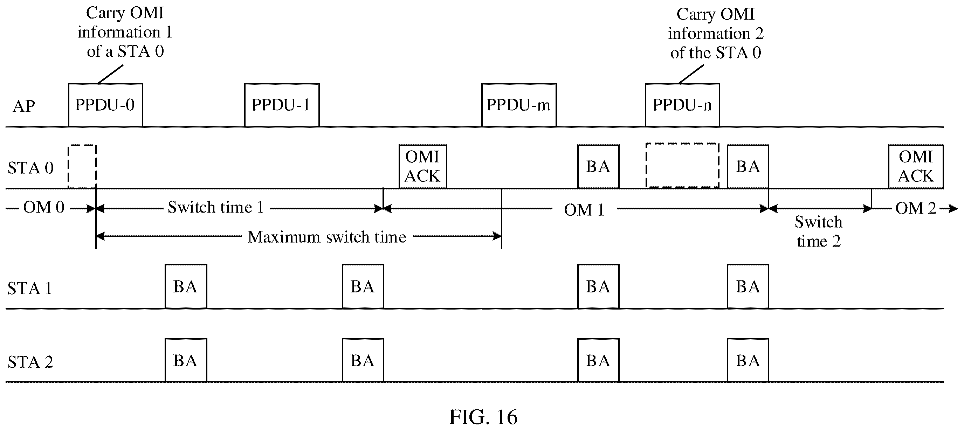

FIG. 16 shows a specific example in which an AP initiates OM switching according to this application, and includes but is not limited to the following steps.

S1601: The AP sends a physical protocol data unit (physical protocol data unit, PPDU)-0, where the PPDU-0 includes downlink data of a STA 1 and a STA 2, but does not include downlink data of a STA 0, the PPDU-0 includes OMI information 1 of the STA 0, and the OMI information 1 indicates the STA 0 to switch to an OM 1, that is, the PPDU-0 is an example of the foregoing third frame.

For example, the OMI information 1 may be PHY layer information carried in a SIG field of the PPDU-0, and the SIG field of the PPDU-0 may further include an OMI enable field and/or an OMI user field number indication field. If the SIG field of the PPDU-0 includes the OMI enable field, the OMI enable field indicates that the PPDU-0 includes OMI information. The STA that receives the PPDU-0 may determine, based on the OMI enable field, that the PPDU-0 includes the OMI information, and detect the OMI information. If the SIG field of the PPDU-0 includes the OMI user field number indication field, the OMI user field number indication field indicates that a number of OMI user fields included in the PPDU-0 is 1, that is, the PPDU-0 includes one OMI user field carrying the OMI information. The OMI information includes an identifier of the STA 0, that is, the OMI information is the OMI information 1. The STA that receives the PPDU-0 may determine, based on the OMI user field number indication field, that the PPDU-0 includes one OMI user field, and detect OMI information.

For another example, the OMI information 1 may be carried in MAC layer information in a MAC frame, included in the PPDU-0, of the STA 0. For example, the OMI information 1 may be specifically carried in an A-control field included in a frame header of the MAC frame of the STA 0, or carried in an OM switch parameter set element included in a frame body of the MAC frame of the STA 0. The STA 0 may determine, based on the MAC frame, included in the PPDU-0, of the STA 0, that the PPDU-0 includes the OMI information of the STA.

S1602: The STA 0, the STA 1, and the STA 2 separately receive the PPDU-0 from the AP.

The STA 0 may determine, based on the OMI information 1 in the PPDU-0, that the AP indicates the STA 0 to switch to an OM 1, and the STA 0 may determine that the PPDU-0 does not include data of the STA 0. In this case, the STA 0 may start to perform switching after obtaining the OMI information 1, that is, switch from an OM 0 to the OM 1. The STA 1 and the STA 2 may determine that the PPDU-0 includes the respective downlink data of the STA 1 and the STA 2, and does not include respective OMI information. The STA 1 and the STA 2 may respectively obtain the respective downlink data included in the PPDU-0.

S1603: The STA 1 and the STA 2 each send a BA frame to the AP, to notify the AP whether the data in the PPDU-0 is correctly received.

Because the PPDU-0 does not include the data of the STA 0, the STA 0 does not send a BA frame.

S1604: The AP sends a PPDU-1, where the PPDU-1 includes the data of the STA 1 and the STA 2.

The AP may send the PPDU-1 over a channel obtained through contention. Before receiving, from the STA 0, an OMI ACK frame indicating that the STA 0 completes switching to the OM 1, the AP does not send data to the STA 0. Optionally, before S1601, the AP may receive a sixth frame from the STA 0, and the AP may obtain, from the sixth frame, maximum switch time for the STA 0 to perform OM switching, so that the AP does not send data to the STA 0 when the AP does not receive the OMI ACK frame from the STA 0 before an end of the maximum switch time of the STA 0.

S1604: The STA 1 and the STA 2 each send a BA frame to the AP, to notify the AP whether the data in the PPDU-1 is correctly received.

S1605: After switching to the OM 1, the STA 0 sends the OMI ACK frame to the AP.

After completing OM switching, the STA 0 sends the OMI ACK frame to the AP over a channel obtained through contention. The OMI ACK frame includes information indicating that the OM 1 has been switched to. After receiving the OMI ACK frame, the AP may determine that the STA 0 has switched to the OM 1, and may send data to the STA 0. After completing OM switching, the STA 0 notifies the AP, so that both parties reach a consensus on completion of OM switching, and the AP does not need to wait for the maximum switch time of the STA 0 before sending the data to the STA 0. This can improve communication efficiency.

S1606: The AP sends a PPDU-m, where the PPDU-m includes data of the STA 0, the STA 1, and the STA 2. After receiving the PPDU-m, the STA 0, the STA 1, and the STA 2 each send a BA frame to the AP.

The STA 0 receives the PPDU-m in the OM 1.

S1607: The AP sends a PPDU-n, where the PPDU-n includes the data of the STA 0, the STA 1, and the STA 2, the PPDU-n further includes OMI information 2 of the STA 0, and the OMI information 2 indicates the STA 0 to switch to an OM 2.

S1608: The STA 0, the STA 1, and the STA 2 each send a BA frame to the AP, and the STA 0 starts to perform OM switching after sending the BA frame, that is, switch from the OM 1 to the OM 2.

For example, both an OM 0 and the OM 2 are low power consumption (or low throughput) operation modes, and the OM 1 is a high power consumption (high throughput) operation mode. When a downlink data amount of the STA 0 is large, the AP may indicate, via the PPDU-0, the STA 0 to switch to the OM 1, to improve data transmission efficiency. However, when the downlink data amount of the STA 0 is small, the AP may indicate, via the PPDU-n, the STA 0 to switch to the OM 2, to reduce power consumption of the STA 0.

Optionally, S1609: After switching to the OM 2, the STA 0 sends the OMI ACK frame to the AP.

After completing switching, the STA 0 may send the OMI ACK frame to the AP, to notify the AP that the STA 0 has switched to the OM 2.

In an implementation, the PPDU including the OMI information may further include indication information, and the indication information indicates whether a STA corresponding to the OMI information needs to send an OMI ACK frame after completing switching. For example, indication information in the PPDU-0 indicates that the OMI ACK frame needs to be sent after switching is completed. In this case, the STA 0 sends the OMI ACK frame to the AP after switching to the OM 1. The PPDU-n may also include the indication information. If the indication information indicates that an OMI ACK frame needs to be sent, the STA performs S1607. If the indication information indicates that an OMI ACK frame does not need to be sent, the STA 0 does not send the OMI ACK frame to the AP after completing switching, to reduce power overheads of the STA 0.

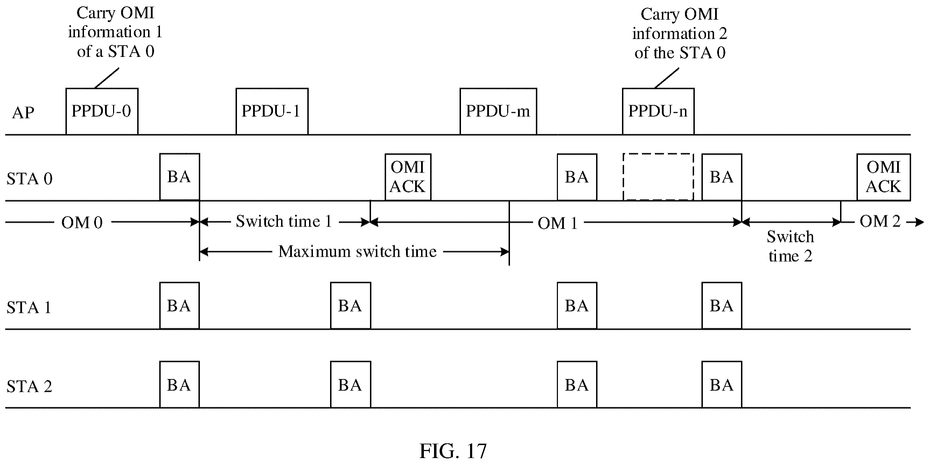

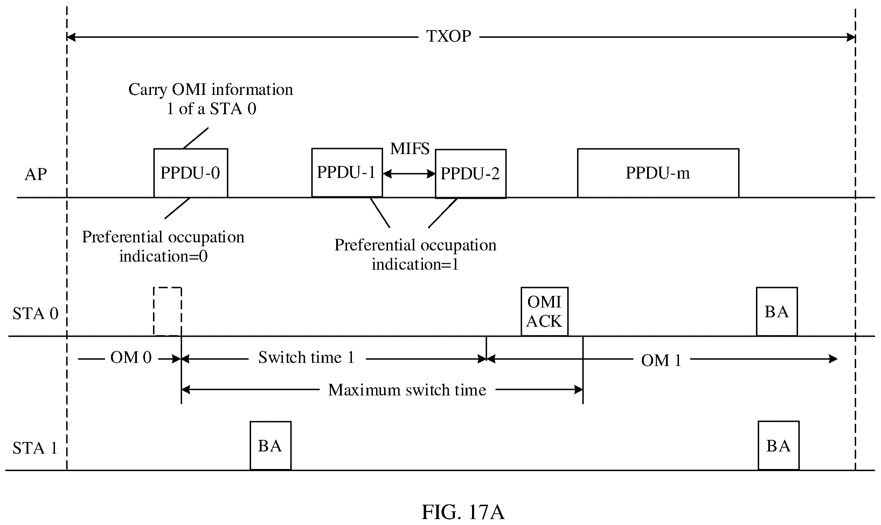

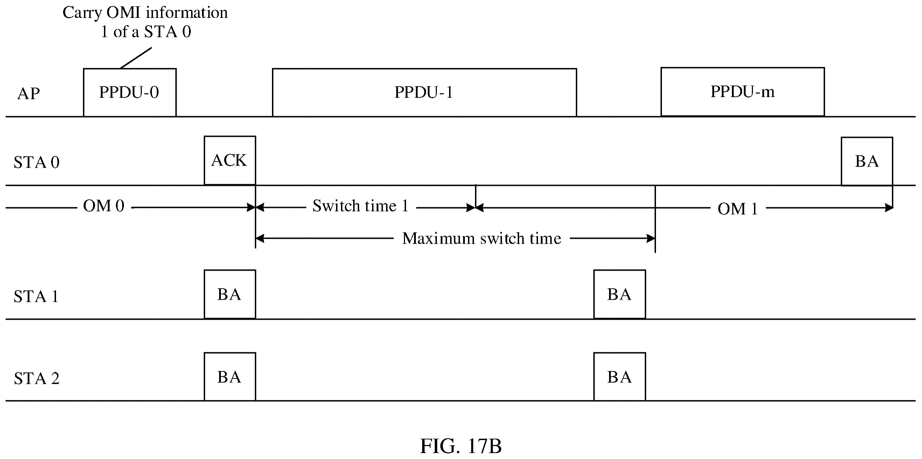

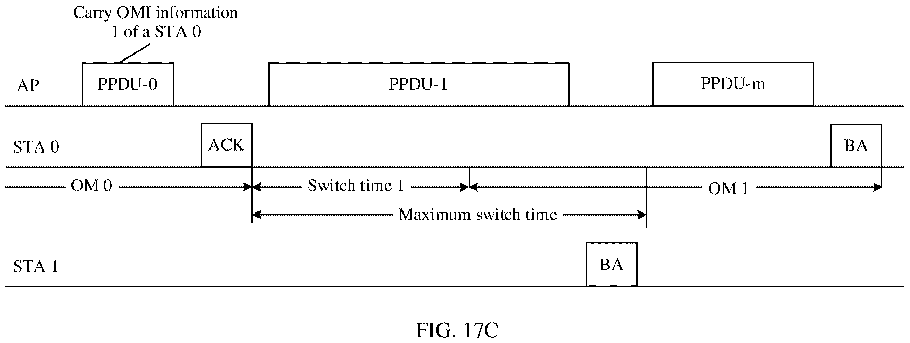

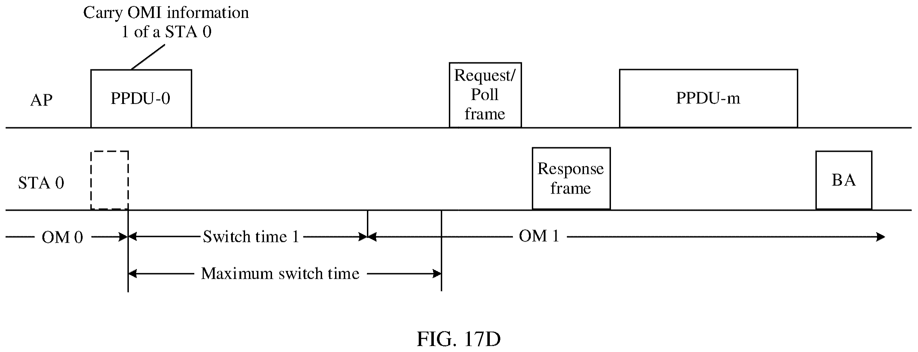

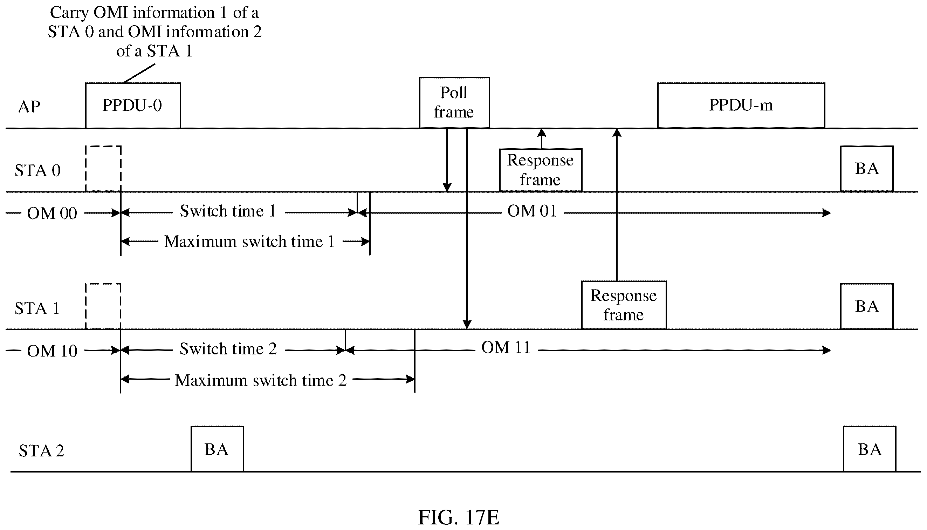

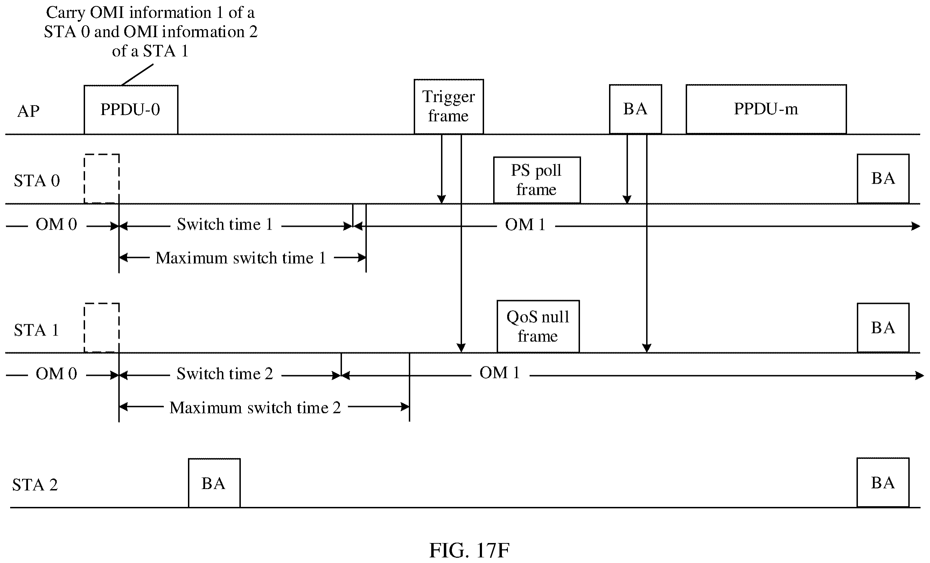

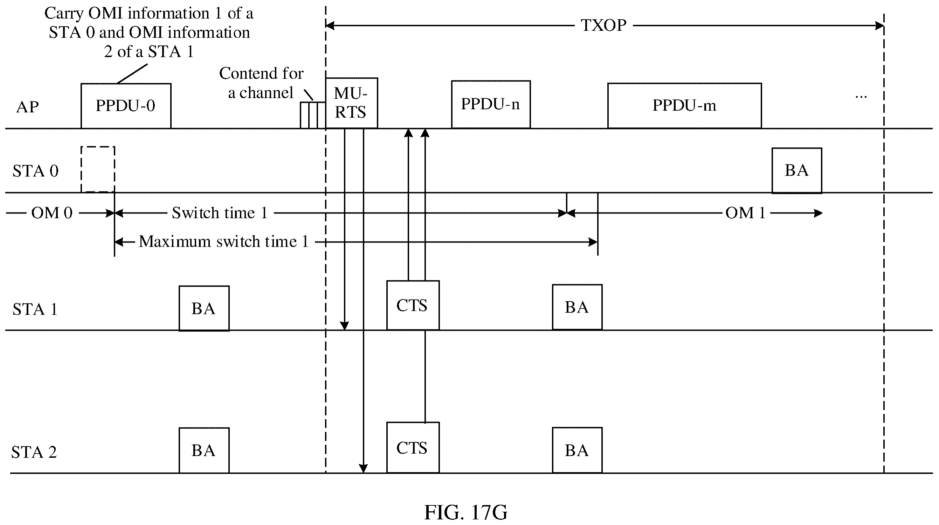

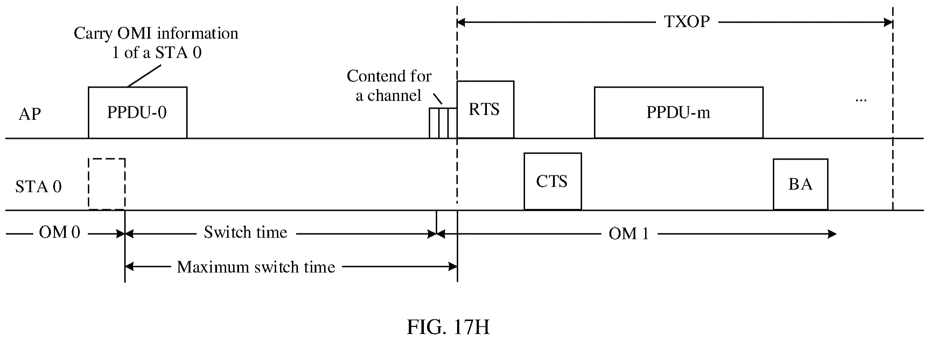

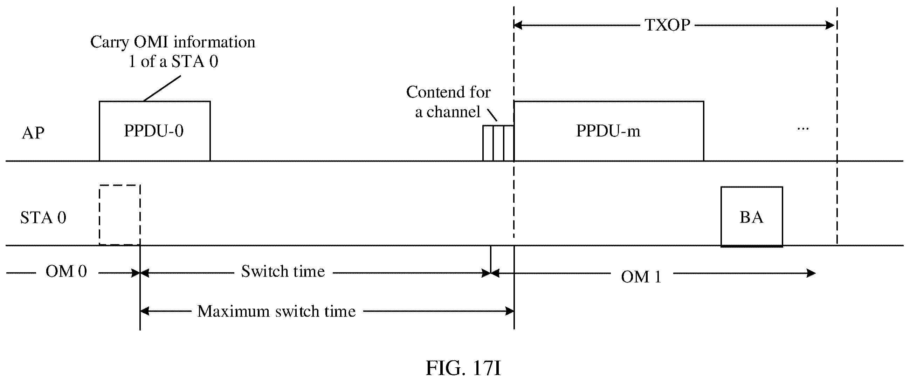

FIG. 17 shows another specific example in which an AP initiates an OM switching according to this application. A difference between the example shown in FIG. 17 and the example shown in FIG. 16 lies in that regardless of whether a PPDU including OMI information includes data of a target STA of the OMI information, the STA needs to send a BA frame to the AP after receiving the PPDU. For example, after the STA 0 receives the PPDU-0 from the AP, even if the PPDU-0 does not include the data of the STA 0, the STA 0 still sends a BA frame to the AP. The BA frame is used by the STA 0 to acknowledge switching of an OM to a first OM, or indicates that the PPDU-0 is correctly received.

In an implementation, after the STA 0 receives the PPDU-0, if the STA 0 does not accept switching to the first OM, the STA 0 may send a BA frame. The BA frame may indicate that the STA 0 rejects switching to the first OM. Optionally, the BA frame may further carry an operation parameter of an OM recommended by the STA 0. The AP receives the BA frame from the STA 0, and may determine, based on the BA frame, whether to send a PPDU including updated OMI information to the STA 0. For example, after the AP obtains the operation parameter of the OM recommended by the STA 0, if the AP accepts the operation parameter of the OM recommended by the STA 0, the AP may send a PPDU-x to the STA 0. OMI information in the PPDU-x may indicate the STA 0 to switch to the OM recommended by the STA 0.

For implementation of another process in the example shown in FIG. 17, refer to the example shown in FIG. 16. For brevity, details are not described herein again.

In the examples shown in FIG. 16 and FIG. 17, after switching the OM to the OM 1, the STA 0 may obtain a channel through contention by performing clear channel assessment, to send an OMI ACK frame to the AP. In another implementation, a communication frame sent by the AP may include ninth information, and the ninth information indicates whether a STA that performs OM switching is allowed to preferentially occupy a channel to send an OMI ACK frame. For example, the ninth information may be referred to as a preferential occupation indication. However, this application is not limited thereto. For example, the ninth information includes 1 bit. If the 1 bit indicates 1, it indicates that a channel is allowed to be preferentially occupied after transmission of the current communication frame is completed. If the 1 bit indicates 0, it indicates that the channel is not allowed to be preferentially occupied after transmission of the current communication frame is completed.

For example, as shown in FIG. 17A, the AP indicates, via the OMI information 1 in the PPDU-0, the STA 0 to switch to the OM 1. The STA 0 performs OM switching after obtaining the OMI information 1. A preferential occupation indication in the PPDU-0 is 0, to indicate that the AP does not allow the STA 0 to preferentially occupy the channel to transmit the OMI ACK frame after transmission of the current communication frame (namely, the PPDU-0) is completed. The AP may still occupy the channel by communicating with another STA. For example, the AP may still occupy the channel by sending the PPDU-1. The preferential occupation indication in the PPDU-1 is 1, to indicate that the STA 0 is allowed to preferentially occupy the channel after transmission of the PPDU-1 is completed. If the STA 0 has completed OM switching, the STA 0 may preferentially occupy the channel to send the OMI ACK frame after transmission of the PPDU-1 is completed. If an OMI ACK frame from the STA 0 is not detected after transmission of the PPDU-1 is completed, the AP may send a PPDU-2. A preferential occupation indication in the PPDU-2 is 1, and the STA 0 has completed OM switching. In addition, the STA 0 determines, based on that the preferential occupation indication in the PPDU-2 is 1, that the STA 0 may preferentially occupy the channel after transmission of the PPDU-2 ends, and the STA 0 preferentially occupies the channel after transmission of the PPDU-2 ends to send the OMI ACK frame. Therefore, the STA 0 can send the OMI ACK frame in time, and the AP determines, based on the OMI ACK frame, that the STA 0 has switched to the OM 1, to transmit the data of the STA 0 in the PPDU-m based on the parameter corresponding to the OM 1. The STA 0 receives the PPDU-m in the OM 1, and feeds back a BA frame. Based on this solution, a data transmission delay of the STA 0 can be reduced, and data transmission efficiency of the STA 0 can be improved.

In a possible implementation, in the example shown in FIG. 17A, after completing OM switching, the STA 0 may perform clear channel assessment. Once it is detected that the channel is idle, the STA 0 may occupy the channel to transmit the OMI ACK frame. In other words, when a PPDU including a preferential occupation indication is not detected, the STA 0 may obtain a channel through contention by performing clear channel assessment, to send an OMI ACK frame.

Optionally, as shown in FIG. 17A, if a preferential occupation indication in a communication frame is 1, an interframe space between the communication frame and a next communication frame may be a specified interframe space, and the specified space may be a modified interframe space (modified interframe space, MIFS). Therefore, after the STA 0 receives the communication frame including the preferential occupation indication that indicates 1, the STA 0 may preferentially occupy the channel to transmit the OMI ACK frame. If a preferential occupation indication in a communication frame is 0, an interframe space between the communication frame and a next communication frame may be an SIFS.

Optionally, when a preferential occupation indication in a communication frame is 1, a receiver of the communication frame does not need to reply with an acknowledgment frame of the communication frame. When a preferential occupation indication in a communication frame is 0, a receiver of the communication frame may reply with an acknowledgment frame of the communication frame. For example, as shown in FIG. 17A, the PPDU-0 further includes the data of the STA 1. Because the preferential occupation indication in the PPDU-0 is 0, the STA 1 may send a BA frame to the AP after receiving the PPDU-0. The preferential occupation indications in the PPDU-1 and the PPDU-2 that include the data of the STA 1 are 1, the STA 1 does not send a BA frame after receiving the PPDU-1 and the PPDU-2.

It should be noted that, in the example shown in FIG. 17A, the AP may control a length of a communication frame transmitted within the maximum switch time of the STA 0. For example, a long communication frame may be divided into a plurality of short communication frames for sending, and more interframe spaces can be provided for the STA 0, so that the STA 0 can transmit an OMI ACK frame in time after completing OM switching. As shown in FIG. 17A, the AP respectively transmits the data of the STA 1 and the STA 2 in a shorter PPDU-1 and a shorter PPDU-2. An opportunity of transmitting the OMI ACK frame is provided for the STA 0 between the PPDU-1 and the PPDU-2, to avoid a case in which the STA 0 cannot obtain a channel through contention in time after completing OM switching because the AP transmits a long PPDU. In a manner, both the preferential occupation indications in the PPDU-1 and the PPDU-2 indicate that a STA that completes OM switching is allowed to preferentially occupy a channel after transmission is completed, so that the STA 1 and the STA 2 do not feed back a BA frame based on the preferential occupation indication, and the STA 0 can preferentially occupy the channel to send an OMI ACK frame. After sending a plurality of PPDUs including an indication in which preferential occupation of a channel is allowed, the AP may send one PPDU including an indication in which preferential occupation of a channel is not allowed, so that the STA 1 and the STA 2 can restore the BA frame.

FIG. 17B shows another specific example in which an AP initiates OM switching according to this application. In the example shown in FIG. 17B, after a STA obtains, from the AP, OMI information that indicates the STA to perform OM switching, the STA sends an ACK frame to the AP, and the AP and the STA consider by default that the STA performs OM switching after sending the ACK frame, and completes switching within maximum switch time. For example, as shown in FIG. 17B, the AP sends the PPDU-0 including the OMI information 1 to the STA. After obtaining the OMI information 1 in the PPDU-0, the STA 0 determines to switch the OM from the OM 0 to the OM 1, and the STA 0 sends the ACK frame to the AP. After receiving the ACK frame, the AP learns that the STA 0 has received the OMI information 1. The AP and the STA 0 consider by default that the STA 0 starts to perform switching after the ACK frame, and completes switching within the maximum switch time. The PPDU-0 may include the data of the STA 1 and the STA 2 in an orthogonal frequency division multiple access (orthogonal frequency division multiple access, OFDMA) manner. After receiving the PPDU-0, the STA 1 and the STA 2 each send a BA frame to the STA 1 and the STA 2, to notify the AP whether the data in the PPDU-0 is correctly received.

Within the maximum switch time in which the STA 0 performs OM switching, the AP may communicate with another STA without waiting for the STA 0 to perform OM switching. For example, the AP may send, to the STA 1 and the STA 2, a PPDU-1 including the data of the STA 1 and the STA 2. After receiving the PPDU-1, the STA 1 and the STA 2 each send a BA frame to the AP. This can effectively improve media utilization. After an end of the maximum switch time, the AP sends, to the STA 0, the PPDU-m including the data of the STA 0. The STA 0 may receive the PPDU-m in the OM 1, and send a BA frame to the AP after receiving the PPDU-m.

It should be understood that the PPDU including the OMI information may not include data of another STA. As shown in FIG. 17C, the PPDU-0 includes the OMI information 1, of the STA 0, that indicates the STA 0 to switch the OM from the OM 0 to the OM 1. After receiving the PPDU-0, the STA 0 sends an ACK frame to the AP, and performs OM switching after sending the ACK frame. The AP may communicate with another STA within the maximum switch time for the STA 0 to perform OM switching, to improve media utilization. For example, the AP sends the PPDU-1 to the STA 1, and the STA 1 sends a BA frame to the AP after receiving the PPDU-1. After the maximum switch time, the AP considers that the STA 0 has switched to the OM 1, and sends the PPDU-m to the STA 0. The STA 0 receives the PPDU-m in the OM 1, and sends a BA frame to the AP.

In the examples shown in FIG. 17, FIG. 17B, and FIG. 17C, the STA starts to perform OM switching after receiving the PPDU including the OMI information and feeding back the ACK frame to the AP. Therefore, in an optional implementation, the AP may shorten a length of the PPDU including the OMI information as much as possible. In this case, the STA can obtain the OMI information as soon as possible, and feed back the ACK frame, so that the STA can perform OM switching as soon as possible. This can ensure that the STA 0 completes OM switching as soon as possible, to reduce the data transmission delay of the STA 0.

FIG. 17D shows another specific example in which an AP initiates OM switching according to an embodiment of this application. In the example shown in FIG. 17D, after obtaining, from the AP, OMI information that indicates the STA to switch to the OM 1, the STA starts to perform OM switching. The AP sends a twelfth frame to the STA after the maximum switch time of the STA. The twelfth frame indicates the STA to feed back a current OM state. After receiving the twelfth frame, the STA sends the first frame to the AP. The first frame indicates a current OM of the STA, for example, the OM 1. The AP may determine, based on the first frame, that the STA has switched to the OM 1. As shown in FIG. 17D, the AP sends the PPDU-0 including the OMI information 1 to the STA 0, to notify the STA 0 to switch to the OM 1. After obtaining the OMI information 1, the STA 0 starts to perform OM switching. For example, the OMI information 1 may be the PHY layer information carried in the SIG field of the PPDU-0, or may be the MAC layer information carried in the MAC frame, included in the PPDU-0, of the STA 0. This is not limited in this application. The AP may send the twelfth frame to the STA 0 after the maximum switch time after the OMI information 1. For example, the twelfth frame may be a request frame or a polling frame shown in FIG. 17D. The AP indicates, via the twelfth frame, the STA 0 to feed back an OM state of the STA 0. After receiving the twelfth frame, the STA 0 sends a response frame (namely, an example of the first frame) to the AP. The response frame may indicate the current OM state of the STA 0. In a manner, the response frame may include an indication indicating whether switching of the OM state is completed. In another manner, the response frame may include a state report that indicates the current OM state of the STA 0. If the response frame indicates that the STA 0 has completed switching or the current OM state is the OM 1, the AP determines that the STA 0 has completed switching, and sends, to the STA 0, the PPDU-m including the data of the STA 0. The STA 0 may receive the PPDU-m in the OM 1, and send the BA to the AP after receiving the PPDU-m. If the AP does not receive the response frame from the STA 0, the AP may delay sending the data of the STA 0. For example, the AP may send the communication frame including the OMI information 1 to the STA 0 again, to notify the STA 0 to perform OM switching again.

In an implementation, one PPDU may include OMI information of a plurality of STAs. As shown in FIG. 17E, the PPDU-0 sent by the AP includes the OMI information 1 of the STA 0 and the OMI information 2 of the STA 1. After receiving the OMI information 1, the STA 0 performs OM switching based on the OMI information 1, that is, switches the OM from an OM 00 to an OM 01. After receiving the OMI information 2, the STA 1 performs OM switching based on the OMI information 2, that is, switches the OM from an OM 10 to an OM 11. Optionally, the PPDU-0 may further include the data of the STA 2. After receiving the PPDU-0, the STA 2 may send a BA frame to the AP. The maximum switch time of the STA 0 is maximum switch time 1, and maximum switch time of the STA 1 is maximum switch time 2. In this case, the AP may send the twelfth frame after a longer one of the maximum switch time 1 and the maximum switch time 2 ends. For example, as shown in FIG. 17E, the twelfth frame may be a polling frame, and indicates the STA 0 and the STA 1 to feed back current OM states. After receiving the polling frame, the STA 0 and the STA 1 each send a response frame to the AP. The AP determines the OM states of the STA 0 and the STA 1 based on the response frames of the STA 0 and the STA 1. If both the STA 0 and the STA 1 have completed switching, the AP may include the data of the STA 0 and the STA 1 in the PPDU-m. The STA 0 may receive the PPDU-m in the OM 01, and send a BA frame to the AP, and the STA 1 may receive the PPDU-m in the OM 11, and send a BA frame to the AP. The PPDU-m may further include the data of the STA 2. After receiving PPDU-m, the STA 2 may send a BA frame to the AP. Alternatively, if the response frame sent by the STA 0 indicates that the STA 0 still works in the OM 00, the AP may transmit the parameter of the STA 0 in the PPDU-m based on a parameter corresponding to the OM 00, and the STA 0 may receive the PPDU-m in the OM 00. Alternatively, if the AP does not receive the response frame from the STA 0, the AP may delay sending the data of the STA 0. For example, the AP may send the OMI information 1 of the STA 0 in the PPDU-m again, to notify the STA 0 to perform OM switching.

FIG. 17D and FIG. 17E are described by using an example in which the twelfth frame is a request frame or a polling frame, and the first frame is a response frame. However, this application is not limited thereto. The twelfth frame may alternatively be a trigger frame, and the first frame may be a control frame or a data frame. As shown in FIG. 17F, the twelfth frame may be a trigger frame. After notifying the STA 0 and the STA 1 to perform OM switching, the AP sends the trigger frame after a longer one of the maximum switch time 1 and the maximum switch time 2 ends, to indicate the STA 0 and the STA 1 to feed back the OM states. The STA 0 receives the trigger frame, and sends a control frame to the AP after an SIFS. For example, the control frame is a power save poll (power save Poll, PS Poll) frame, to notify the AP of the OM state of the STA 0. The STA 1 receives the trigger frame, and sends a data frame to the AP after an SIFS. For example, the data frame may be a quality of service null (quality of service Null, QoS Null) frame, to notify the AP of the OM state of the STA 1. Optionally, after the AP receives, from the STA, the control frame/data frame used to feed back the OM state, the AP may feed back a BA frame. The AP acknowledges that both the STA 0 and the STA 1 have completed switching, and the AP may send the PPDU-m. The PPDU-m may include the data of the STA 0, the STA 1, and the STA 2. The STA 0, the STA 1, and the STA 2 separately receive the PPDU-m in current OM states, and each send a BA frame to the AP.

In an implementation, after notifying the STA to perform OM switching, the AP may perform clear channel assessment to occupy the channel after the STA starts to perform switching and before the end of the maximum switch time, so that the AP can send the data to the STA in time after the end of the maximum switch time. This can reduce a data transmission delay.

For example, as shown in FIG. 17G, after notifying, via the OMI information 1 in the PPDU-0, the STA 0 to switch to the OM 1, the AP may perform clear channel assessment in advance after the OMI information 1 and before the end of the maximum switch time of the STA 0, to contend for a channel. For example, after obtaining the channel through contention, the AP may send a control frame. For example, the AP sends a multi-user request to send (multiple user-request to send, MU-RTS) frame (or may be an RTS frame) to the STA 1 and the STA 2, to notify a transmission opportunity (transmission opportunity, TXOP) occupied by the AP. In response to the MU-RTS frame, the STA 1 and the STA 2 each send a CTS frame to the AP. The AP may still occupy the channel by communicating with the STA 1 and the STA 2. For example, after receiving the CTS frame, the AP may send the PPDU-n, where the PPDU-n includes the data of the STA 1 and the STA 2. The STA 1 and the STA 2 each send a BA frame to the AP. The AP still occupies the channel, so that the AP may send, to the STA 0 at an end moment of maximum transmission time of the STA 0, the PPDU-m including the data of the STA 0. The STA 0 receives the PPDU-m in the OM 1, and feeds back a BA frame. In this solution, the AP contends for the channel in advance, to reduce the data transmission delay of the STA 0.

For another example, as shown in FIG. 17H, after notifying the STA 0 to switch to the OM 1, the AP may contend for a channel before the end of the maximum switch time of the STA 0, and obtain the channel through contention when or after the maximum switch time ends. In this case, the AP may send a control frame to a STA including the STA 0. For example, the control frame may be an RTS frame or an MU-RTS frame, to notify a TXOP occupied by the AP. In response to the control frame, the STA 0 sends a CTS frame to the AP. After receiving the CTS frame, the AP may send, to the STA 0, the PPDU-m including the data of the STA 0. The data of the STA 0 uses the parameter corresponding to the OM 1, and the STA 0 receives the PPDU-0 in the OM 1.

In a possible implementation, after notifying the STA 0 to switch to the OM 1, the AP may contend for the channel before the end of the maximum switch time of the STA 0, and obtain the channel through contention when or after the maximum switch time ends. The AP may send, to the STA 0, the PPDU-m including the data of the STA 0. The STA 0 receives the PPDU-0 in the OM 1, and sends a BA frame to the AP, as shown in FIG. 17I.

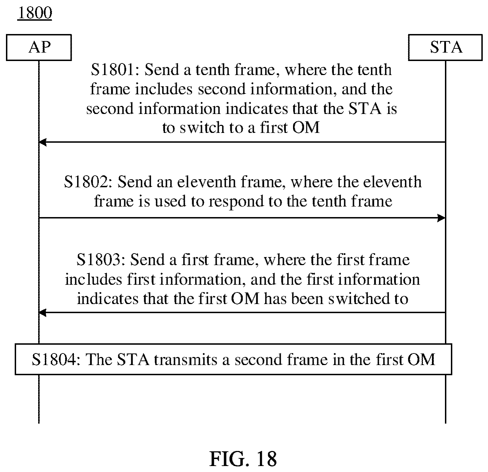

FIG. 18 is a schematic flowchart of a communication method 1800 according to an embodiment of this application. In the example shown in FIG. 18, a STA initiates OM negotiation with an AP. After negotiation, the STA performs OM switching, and notifies the AP after completing switching. The method 1800 includes but is not limited to the following steps.

S1801: The STA sends a tenth frame to the AP, where the tenth frame includes second information, and the second information indicates that the STA is to switch to a first OM.

Correspondingly, the AP receives the tenth frame from the STA, and determines, based on the second information in the tenth frame, that the STA is to switch to the first OM.

For example, the tenth frame includes an OM control subfield, and the second information is carried in the OM control subfield. For example, the tenth frame may be a quality of service (quality of service, QoS) data frame, a QoS null frame, or a management frame.

S1802: The AP sends an eleventh frame to the STA, where the eleventh frame is used to respond to the tenth frame.

After receiving the tenth frame, the AP may send the eleventh frame to the STA to respond to the tenth frame. For example, the eleventh frame includes the second information obtained by the AP from the tenth frame, to acknowledge that the AP learns that the STA is to switch to the first OM. For example, the OM control subfield of the eleventh frame is obtained from the tenth frame, and the OM control subfield includes the second information.

S1803: The STA sends a first frame to the AP, where the first frame includes first information, and the first information indicates that the first OM has been switched to.

The STA may perform OM switching after obtaining the eleventh frame, to switch an OM to the first OM. After completing switching, the STA sends the first frame to the AP, to notify the AP that the STA has completed OM switching.

S1804: The STA transmits a second frame in the first OM.

After completing switching to the first OM and notifying the AP, the STA may transmit the second frame in the first OM.

For implementation of S1803 and S1804, refer to descriptions of the embodiment shown in FIG. 2. For brevity, details are not described herein again.

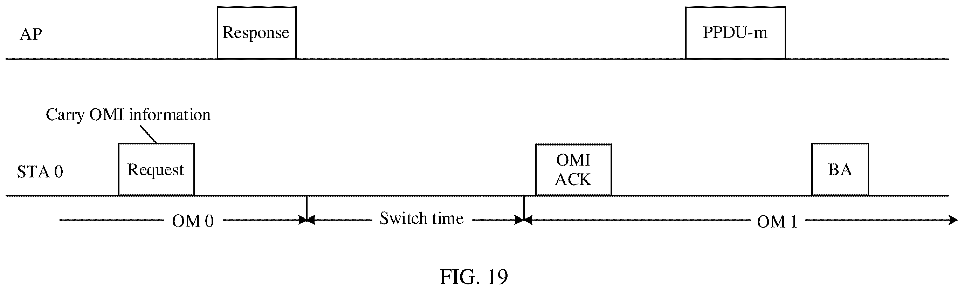

For example, as shown in FIG. 19, a STA 0 sends a request frame (that is, the request frame is an example of the tenth frame) to the AP. The request frame includes OMI information, and the OMI information indicates that the STA 0 is to switch to an OM 1. After receiving the request frame, the AP determines that the STA 0 is to switch to the OM 1, and the AP sends a response frame (that is, the response frame is an example of the eleventh frame) used to respond to the request frame. After receiving the response frame from the AP, the STA 0 starts to perform OM switching, that is, switch the OM to the OM 1. After completing switching to the OM 1, the STA 0 sends an OMI ACK frame to the AP, and notifies, via the OMI ACK frame, the AP that the STA 0 has switched to the OM 1. After receiving the OMI ACK frame, the AP determines that the STA 0 has completed switching, and may send a communication frame to the STA 0. In this case, the AP may send a PPDU-m to the STA 0, where the PPDU-m includes data of the STA 0. The STA 0 receives the PPDU-m in the OM 1, and sends a BA frame to the AP. The BA frame indicates whether the STA 0 correctly receives the data in the PPDU-m.

Based on the foregoing solution, the STA may initiate OM switching of the STA on demand, and notifies the AP after completing switching. Therefore, the AP and the STA can reach a consensus on that the STA completes OM switching, a case in which a communication frame cannot be correctly transmitted because no consensus is reached can be avoided, a resource waste can be reduced, and communication reliability can be improved.

The foregoing describes a case in which the AP or the STA may initiate OM switching of the STA, and the STA performs OM switching after switching negotiation, and notifies the AP after completing switching, so that the AP and the STA reach a consensus on that the STA completes switching.

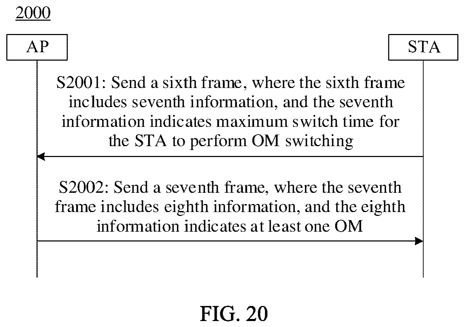

FIG. 20 is a schematic flowchart of a communication method 2000 according to an embodiment of this application. In the method 2000, a STA and an AP may perform OM negotiation, so that the AP may trigger OM switching performed by the STA after negotiation. The method includes but is not limited to the following steps.

S2001: The STA sends a sixth frame to the AP, where the sixth frame includes seventh information, and the seventh information indicates maximum switch time for the STA to perform OM switching.

Correspondingly, the AP receives the sixth frame from the STA, and determines, based on the seventh information in the sixth frame, that the maximum switch time for the STA to perform OM switching.

The seventh information is carried in a second information element, and the second information element is located in a frame body of a MAC frame included in the sixth frame.

S2002: The AP sends a seventh frame to the STA, where the seventh frame includes eighth information, and the eighth information indicates at least one OM.

Correspondingly, the STA receives the seventh frame from the AP, and determines the at least one OM based on the eighth information. The at least one OM is a candidate OM for STA switching, and the AP may trigger switching of the STA to the at least one candidate OM.

The eighth information is carried in a first information element, and the first information element is located in a frame body of a MAC frame included in the seventh frame.

Optionally, the frame body of the MAC frame included in the seventh frame further includes a second information element, and the second information element includes the seventh information, to acknowledge that the AP obtains the maximum switch time of the STA.

In an implementation, the sixth frame and the seventh frame may be management frames. For example, the sixth frame and the seventh frame may be respectively an association request frame and an association response frame in an association phase. In other words, the STA and the AP may negotiate an OM operation parameter and the maximum switch time of the STA in the association phase. The negotiation may be referred to as static negotiation.

For example, the association request frame used as the sixth frame may include the foregoing second information element. For example, the second information element is an OM switch timing (OM switch timing) element, and the seventh information is carried in the OM switch timing element. The association response frame used as the seventh frame may correspondingly include the foregoing first information element. For example, the first information element is an OM switch parameter set (OM switch parameter set) element, and the OM switch parameter set element carries an operation parameter of the candidate OM.

In another implementation, the sixth frame and the seventh frame may be action frames, and the STA may send, to the AP, the action frame including an OM switch timing element, to notify the AP of the maximum switch time of the STA. The AP may send, to the STA, an action frame including an OM switch parameter set element, to notify the STA of the candidate OM. For example, the action frame may be a UHR OM control frame. However, this application is not limited thereto. The OM negotiation performed by the AP and the STA via the action frames may be referred to as semi-static negotiation.

In still another implementation, the sixth frame and the seventh frame may be data frames. In a data transmission process between the STA and the AP, the AP may notify the STA of the candidate OM via a downlink data frame, in an A-MPDU format, that carries an OM switch parameter set element, and the STA may notify, via an uplink data frame, in an A-MPDU format, that carries an OM switch timing element, the AP of the maximum OM switch time for the STA to perform OM switching. The OM negotiation performed by the AP and the STA via the data frames may be referred to as dynamic negotiation.

After negotiation is completed, the STA receives an eighth frame from the AP. The eighth frame is a request to send RTS frame or a multi-user RTS frame. The STA sends a ninth frame to the AP, where the ninth frame is used to respond to the eighth frame. After sending the ninth frame, the STA switches to the first OM within the maximum switch time, where the first OM is one of the at least one OM indicated by the eighth information.

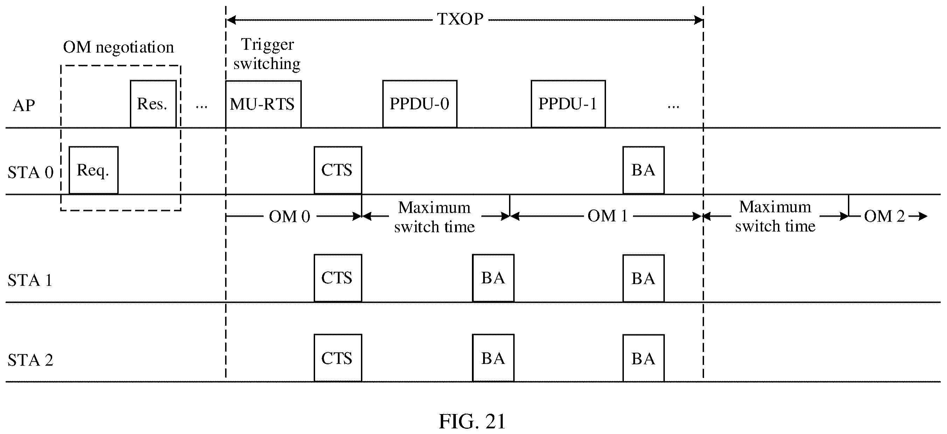

For example, as shown in FIG. 21, an example in which the sixth frame and the seventh frame are respectively the association request frame and the association response frame in the association phase is used. A STA 0 sends the association request (request, Req.) frame to the AP. The Req. frame includes the OM switch timing element, and the STA 0 notifies the AP of the maximum switch time of the STA 0 via the seventh information carried in the OM switch timing element. The AP sends the association response (response, Res.) frame to the STA 0. The Res. frame includes the OM switch parameter set (OM switch parameter set) element, and the OM switch parameter set element carries the operation parameter of the candidate OM. Optionally, the Res. frame further carries the OM switch timing element obtained from the Req. frame. After the AP and the STA 0 complete OM negotiation, the AP contends for a channel to send an MU-RTS frame. A transmission opportunity (transmission opportunity, TXOP) occupied by the AP by sending the MU-RTS frame is shown in FIG. 20. After receiving the MU-RTS frame, the STA 0, a STA 1, and a STA 2 each send a CTS frame used to respond to the MU-RTS frame. For example, the AP triggers, by sending the MU-RTS frame, OM switching performed by the STA 0, and the STA 0 performs OM switching after receiving the MU-RTS frame and sending the CTS frame. The eighth information may indicate an OM, for example, an OM 1. In this case, the STA 0 may switch from an OM 0 to the OM 1. Alternatively, the eighth information indicates a plurality of OMs, and the STA 0 may determine, according to a preset rule, to switch to the preset OM 1. Alternatively, the MU-RTS frame may carry an identifier of the OM 1, and the STA 0 may determine, based on the identifier, to switch to the OM 1. The AP and the STA 0 consider by default that the STA 0 completes switching within maximum switch time of the STA 0 after sending the CTS frame, and the AP does not send a data frame including data of the STA 0 within the maximum switch time. For example, the AP may send a PPDU-0 within the maximum switch time of the STA 0, where the PPDU-0 may include data of the STA 1 and the STA 2, and does not include the data of the STA 0. The STA 1 and the STA 2 each send a BA frame after receiving the PPDU-0. After the maximum switch time of the STA 0, the AP may send a PPDU-1, where the PPDU-1 includes the data of the STA 0, the STA 1, and the STA 2. After receiving the PPDU-1, the STA 0, the STA 1, and the STA 2 each send a BA frame. The AP may send a PPDU-2, and the three STAs may each send a BA frame after receiving the PPDU-2. The STA 0 receives the PPDU-1 and the PPDU-2 in the OM 1. After the TXOP of the AP ends, the STA 0 switches the OM from the OM 1 to an OM 2. For example, in an OM negotiation phase, the AP and the STA 0 may determine that the STA 0 switches to the OM 1 in the TXOP of the AP, and then switch the OM to the OM 2 after the TXOP ends. Alternatively, a PPDU (for example, the PPDU-2 or another PPDU) sent by the AP in the TXOP may carry OMI information indicating the STA 0 to switch to the OM 2 after the TXOP ends. Alternatively, the OMI information may indicate the STA 0 to switch to the OM 2 after receiving the PPDU carrying the OMI information.

In an optional manner, the seventh information included in the sixth frame sent by the STA to the AP may further indicate an OM. For example, the seventh information includes an operation parameter of the OM. The seventh frame sent by the AP to the STA carries the seventh information indicating the operation parameter of the OM. In other words, the seventh frame carries the seventh information.

In another optional manner, the seventh information included in the sixth frame sent by the STA to the AP may further indicate a plurality of OMs, and the plurality of OMs have different purposes.

For example, the seventh information indicates two types of OMs, for example, the OM 0 and the OM 1. The OM 1 is used to send and/or receive data, and the OM 0 is used to listen to a channel when no data is transmitted. For example, in the example shown in FIG. 21, the STA 0 listens to a channel in the OM 0, and the AP contends for the channel to send the MU-RTS frame, and occupies the TXOP. The MU-RTS frame further indicates the STA 0 to receive downlink data. After receiving the MU-RTS frame, the STA 0 determines to switch the OM to the OM 1. After returning the CTS frame, the STA 0 starts to perform OM switching, that is, switch the OM to the OM 1.

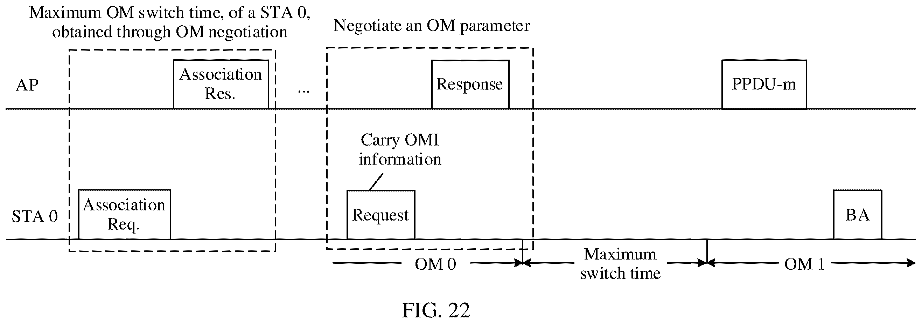

For another example, as shown in FIG. 22, the sixth frame and the seventh frame are respectively the association Req. frame and the association Res. frame in the association phase. The association Req. frame includes the OM switch timing element carrying the seventh information, and the seventh information is used for the maximum switch time of the STA 0. The AP sends the association Res. frame to respond to the association Req. frame. Optionally, the Res. frame may carry the OM switch timing element obtained from the Req. frame; and/or the association Res. frame may include the OM switch parameter set element, and the OM switch parameter set element may be the operation parameter of the candidate OM.

After the AP and the STA 0 complete OM negotiation, the STA 0 contends for the channel, and then sends the request frame carrying the OMI information to the AP. The OMI information indicates that the STA 0 is to switch to the OM 1. After receiving the request frame, the AP sends, to the STA 0, the response frame used to respond to the request frame. After receiving the response frame from the AP, the STA 0 starts to perform OM switching, that is, switches the OM to the OM 1. The AP may determine that the STA 0 can complete switching within the maximum switch time of the STA 0 after the response frame, and the AP may send a PPDU-m to the AP after the maximum switch time. For example, the AP may contend for the channel to send the PPDU-m to the STA 0. Alternatively, in the TXOP of the AP, the AP can send the PPDU-m without contending for the channel. For example, the TXOP may be a TXOP occupied by the AP to send the response frame. However, this application is not limited thereto. The PPDU-m includes the data of the STA 0. The STA 0 receives the PPDU-m in the OM 1, and sends a BA frame to the AP. The BA frame indicates whether the STA 0 correctly receives the data in the PPDU-m.

Based on the foregoing solution, the AP and the STA may perform OM negotiation, to determine an OM parameter of the at least one OM and the maximum switch time for the STA to perform OM switching. After the AP triggers OM switching of the STA, the STA starts OM switching after sending the response frame, and completes switching within the maximum switch time, so that the AP and the STA can reach a consensus on time for completing switching by the STA. This can avoid a case in which a communication frame cannot be correctly transmitted because no consensus is reached, reduce a resource waste, improve communication reliability.

It may be understood that, to implement the functions in the foregoing embodiments, the AP and the STA include corresponding hardware structures and/or software modules for performing the functions. A person skilled in the art should be easily aware that, with reference to units and method steps in the examples described in embodiments disclosed in this application, this application can be implemented by hardware or a combination of hardware and computer software. Whether a function is performed through hardware or hardware driven by computer software depends on particular application scenarios and design constraint conditions of the technical solutions.

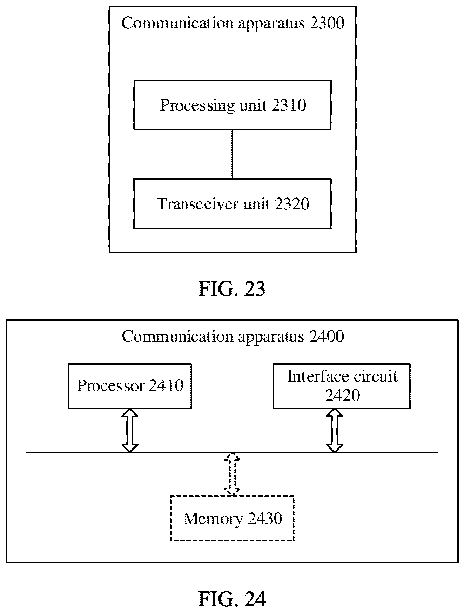

FIG. 23 and FIG. 24 are diagrams of structures of possible communication apparatuses according to embodiments of this application. These communication apparatuses may be configured to implement functions of the STA or the AP in the foregoing method embodiments, and therefore can also implement beneficial effect of the foregoing method embodiments. In this embodiment of this application, the communication apparatus may be the AP shown in FIG. 1, or may be the STA shown in FIG. 1, or may be a module (for example, a chip or a chip system) in a communication device that implements functions of the AP or the STA.

The communication apparatus 2300 includes a transceiver unit 2320, and the transceiver unit 2320 may be configured to receive or send information. The communication apparatus 2300 may further include a processing unit 2310, and the processing unit 2310 may be configured to process instructions or data, to implement corresponding operations.

It should be understood that, when the communication apparatus 2300 is the chip configured (or used) in the communication device, the transceiver unit 2320 in the communication apparatus 2300 may be an input/output interface or a circuit in the chip, and the processing unit 2310 in the communication apparatus 2300 may be a processor in the chip.

Optionally, the communication apparatus 2300 may further include a storage unit. The storage unit may be configured to store instructions or data. The processing unit 2310 may execute the instructions or the data stored in the storage unit, to enable the communication apparatus to implement a corresponding operation.

The communication apparatus 2300 may be configured to implement the functions of the AP or the STA in the method embodiments shown in FIG. 2.

When the communication apparatus 2300 is configured to implement the functions of the AP in the method embodiments shown in FIG. 2, the transceiver unit 2320 is configured to receive a first frame from a STA. The first frame includes first information, and the first information indicates that a first operation mode OM has been switched to. The processing unit 2310 is configured to determine, based on the first information, that the STA has switched to the first OM.

When the communication apparatus 2300 is configured to implement the functions of the STA in the method embodiments shown in FIG. 2, the processing unit 2310 is configured to generate a first frame. The first frame includes first information, and the first information indicates that a first operation mode OM has been switched to. The transceiver unit 2320 is configured to send the first frame to an access point AP. The transceiver unit is further configured to transmit a second frame in the first OM.

The communication apparatus 2300 may be configured to implement the functions of the AP or the STA in the method embodiments shown in FIG. 20.

When the communication apparatus 2300 is configured to implement the functions of the AP in the method embodiments shown in FIG. 20, the transceiver unit 2320 is configured to receive a sixth frame from a STA. The sixth frame includes seventh information, and the seventh information indicates maximum switch time for the STA to perform OM switching. The processing unit 2310 is configured to determine, based on the seventh information, the maximum switch time for the STA to perform OM switching.

When the communication apparatus 2300 is configured to implement the functions of the STA in the method embodiments shown in FIG. 20, the processing unit 2310 is configured to determine a sixth frame. The sixth frame includes seventh information, and the seventh information indicates maximum switch time for the STA to perform OM switching. The transceiver unit 2320 is configured to send the sixth frame to an AP.

The transceiver unit 2320 is further configured to send a second communication frame to the AP, where the second communication frame includes second information, the second information indicates M candidate time periods in N candidate time periods, the M candidate time periods are time periods in which the STA supports sensing measurement, and M is a positive integer less than or equal to N; and/or the transceiver unit 2320 is further configured to send the second communication frame to the AP, where the second communication frame includes fourth information, the fourth information indicates K candidate time periods, and the K candidate time periods are time periods other than the N candidate time periods recommended by the STA.

For more detailed descriptions of the processing unit 2310 and the transceiver unit 2320, refer to related descriptions in the method embodiments shown in FIG. 2, FIG. 5, FIG. 18, and FIG. 20.

It should be understood that the transceiver unit 2320 in the communication apparatus 2300 can be implemented by using a communication interface (for example, a transceiver, a transceiver circuit, an input/output interface, or a pin). When the communication interface is a transceiver, the transceiver may include a receiver and/or a transmitter. The processing unit 2310 in the communication apparatus 2300 may be implemented by using at least one processor. The processing unit 2310 in the communication apparatus 2300 may alternatively be implemented by using at least one logic circuit. Optionally, the communication apparatus 2300 further includes a storage unit, and the storage unit may be implemented by using a memory.

As shown in FIG. 24, a communication apparatus 2400 includes a processor 2410 and an interface circuit 2420. The processor 2410 is coupled to the interface circuit 2420. It may be understood that the interface circuit 2420 may be a transceiver or an input/output interface. Optionally, the communication apparatus 2400 may further include a memory 2430, configured to: store instructions executed by the processor 2410, or store input data required by the processor 2410 to run the instructions, or store data generated after the processor 2410 runs the instructions.

In an implementation, the memory 2430 may alternatively be integrated into the processor 2410, or may be independent of the processor 2410.

When the communication apparatus 2400 is configured to implement the method shown in FIG. 8, the processor 2410 is configured to implement the functions of the processing unit 2310, and the interface circuit 2420 is configured to implement the functions of the transceiver unit 2320.

When the communication apparatus is a chip of a communication device having functions of an AP, the chip may implement the functions of the AP in the foregoing method embodiments. The chip receives information from another module (for example, a radio frequency module or an antenna) in the AP, where the information is sent by a STA to the AP; or the chip sends information to another module (for example, a radio frequency module or an antenna) in the AP, where the information is sent by the AP to a STA.

When the communication apparatus is a chip of a communication device having functions of a STA, the chip may implement the functions of the STA in the foregoing method embodiments. The chip receives information from another module (for example, a radio frequency module or an antenna) in the STA, where the information is sent by an AP to the STA; or the chip sends information to another module (for example, a radio frequency module or an antenna) in the STA, where the information is sent by the STA to an AP.

It should be understood that the processor in embodiments of this application may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, to enable the processor to read information from the storage medium and write the information into the storage medium. The storage medium may alternatively be a component of the processor. The processor and the storage medium may be located in an ASIC. In addition, the ASIC may be located in the AP or the STA. The processor and the storage medium may alternatively exist in the AP or the STA as discrete components.

According to the methods provided in embodiments of this application, an embodiment of this application further provides a computer program product. The computer program product includes computer program code, and when the computer program code is executed by one or more processors, an apparatus including the processor is enabled to perform the methods shown in FIG. 2, FIG. 5, FIG. 18, and FIG. 20.

All or some of the foregoing embodiments may be implemented by using software, hardware, firmware, or any combination thereof. When software is used to implement embodiments, all or a part of the embodiments may be implemented in a form of a computer program product. The computer program product includes one or more computer programs or instructions. When the computer programs or the instructions are loaded and executed on a computer, the procedure or functions according to embodiments of this application are all or partially performed. The computer may be a general-purpose computer, a dedicated computer, a computer network, a communication device having functions of the AP, a communication device having functions of the STA, or another programmable apparatus.

According to the methods provided in embodiments of this application, an embodiment of this application further provides a computer-readable storage medium. The computer-readable storage medium stores a computer program or instructions, and when the computer program or the instructions are run by one or more processors, an apparatus including the processor is enabled to perform the methods shown in FIG. 2, FIG. 5, FIG. 18, and FIG. 20.

The computer programs or the instructions may be stored in the computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

According to the method provided in embodiments of this application, an embodiment of this application further provides a communication system, including one or more APs described above. The system may further include one or more STAs described above.

In several embodiments provided in this application, it should be understood that the disclosed system, apparatus, and method may be implemented in other manners. For example, the described apparatus is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

Units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

The foregoing descriptions are merely specific implementations of this application, but the protection scope of this application is not limited thereto. Any variation or replacement that can be readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a station STA, a first frame to an access point AP, wherein the first frame comprises first information, and the first information indicates that the STA has switched to a first operation mode OM; and
transmitting, by the STA, a second frame in the first OM.

2. The method according to claim 1, wherein the method further comprises:
receiving, by the STA, a third frame from the AP, wherein the third frame comprises second information, and the second information indicates the STA to switch to the first OM.

3. The method according to claim 2, wherein the third frame comprises data of the STA and/or data of a STA other than the STA.

4. The method according to claim 2 or 3, wherein the second information further indicates an identifier of the STA, and/or the second information further indicates one or more of the following operation parameters of the first OM:
a channel bandwidth, a modulation and coding scheme MCS, a number of data spatial streams, or a spatial configuration.

5. The method according to any one of claims 2 to 4, wherein the method further comprises:
determining, by the STA based on a first field of the third frame, that the third frame comprises the second information, wherein the first field carries third information, and the third information indicates that the third frame comprises the second information.

6. The method according to claim 5, wherein the second information is carried in a second field of the third frame, and the third information is carried in a third field of the third frame; and
the second field and/or the third field is a U-SIG field or a UHR-SIG field; or
the second field and/or the third field is located between a U-SIG field and a UHR-SIG field, between a UHR-SIG field and a data field, or between a non-high throughput long training field L-LTF and an ultra-high reliability long training field UHR-LTF.

7. The method according to any one of claims 2 to 6, wherein the third frame further comprises fourth information, the fourth information indicates a number N of pieces of operation mode indication OMI information comprised in the third frame, the second information is one of the N pieces of OMI information, and N is a positive integer.

8. The method according to claim 7, wherein the fourth information is carried in a fourth field of the third frame, and the fourth field may be a U-SIG field or a UHR-SIG field, or the fourth field is located between a U-SIG field and a UHR-SIG field, between a UHR-SIG field and a data field, or between a non-high throughput long training field L-LTF and an ultra-high reliability long training field UHR-LTF.

9. The method according to any one of claims 3 to 8, wherein the sending, by the STA, the first frame to the AP comprises:
sending, by the STA, a fourth frame to the AP, wherein the fourth frame is used by the STA to acknowledge switching of an operation mode to the first OM or indicates that the third frame is correctly received;
switching, by the STA, the operation mode to the first OM; and
sending, by the STA, the first frame to the AP.

10. The method according to any one of claims 3 to 8, wherein before the sending, by the STA, the first frame to the AP, the method further comprises:
when the third frame comprises the data of the STA, after sending a fifth frame to the AP, switching, by the STA, the operation mode to the first OM, wherein the fifth frame indicates whether the STA successfully receives the data of the STA comprised in the third frame; or
when the third frame does not comprise the data of the STA, after obtaining the second information from the third frame, switching, by the STA, the operation mode to the first OM.

11. The method according to any one of claims 2 to 4, wherein the second information is carried in an aggregation control field, and the aggregation control field is located in a frame header of a media access control MAC frame comprised in the third frame.

12. The method according to claim 11, wherein the second information is specifically carried in a UHR OM control subfield and/or an OM control subfield in the aggregation control field.

13. The method according to claim 12, wherein the method further comprises:
determining, by the STA based on fifth information carried in a second subfield in the aggregation control field, that the second subfield is the UHR OM control subfield, wherein the fifth information indicates that the second subfield is the UHR OM control subfield, wherein
if the second subfield in the aggregation control field carries sixth information, the aggregation control field carrying the sixth information is an extremely high throughput EHT OM control subfield, and the sixth information indicates that the second subfield is an EHT OM control subfield.

14. The method according to any one of claims 2 to 4, wherein the second information is carried in a first information element, and the first information element is located in a frame body of a MAC frame comprised in the third frame.

15. The method according to claim 13, wherein the MAC frame is an association response frame, an action frame, or a data frame comprising an aggregation MAC protocol data unit A-MPDU format.

16. The method according to claim 2, wherein the method further comprises:
sending, by the STA, a sixth frame to the AP, wherein the sixth frame comprises seventh information, and the seventh information indicates maximum switch time for the STA to perform OM switching.

17. The method according to claim 16, wherein the method further comprises:
sending, by the STA, an acknowledgment frame to the AP, wherein the acknowledgment frame is used to acknowledge that the third frame is received; and
switching, by the STA, to the first OM within the maximum switch time after the acknowledgment frame.

18. The method according to claim 16, wherein the sending, by the STA, the first frame to the AP comprises:
after the maximum switch time after a start moment for performing OM switching, receiving, by the STA, a twelfth frame from the AP, wherein the twelfth frame indicates the STA to feed back an OM state of the STA; and
sending, by the STA, the first frame to the AP.

19. The method according to claim 16, wherein the method further comprises:
before an end of maximum switch time after a start moment for performing OM switching, receiving, by the STA, a communication frame from the AP, wherein the communication frame comprises ninth information, and the ninth information indicates that the STA is allowed to preferentially occupy a channel after transmission of the communication frame is completed; and
the sending, by the STA, the first frame to the AP comprises:
if a moment at which transmission of the communication frame is completed is after the end of the maximum OM switch time of the STA, after transmission of the communication frame is completed, sending, by the STA, the first frame to the AP based on the ninth information.

20. The method according to claim 16, wherein the method further comprises:
receiving, by the STA, a seventh frame from the AP, wherein the seventh frame comprises eighth information, and the eighth information indicates the first OM.

21. The method according to claim 20, wherein the seventh information is carried in a second information element, and the second information element is located in a frame body of a MAC frame comprised in the sixth frame; and
the eighth information is carried in a first information element, and the first information element is located in a frame body of a MAC frame comprised in the seventh frame.

22. The method according to claim 21, wherein the frame body of the MAC frame comprised in the seventh frame further comprises the second information element, and the second information element comprises the seventh information.

23. The method according to any one of claims 20 to 22, wherein the method further comprises:
receiving, by the STA, an eighth frame from the AP, wherein the eighth frame is used to trigger the STA to switch to the first OM, and the eighth frame is a request to send RTS frame or a multi-user RTS frame; and
after sending a ninth frame to the AP, switching, by the STA, to the first OM within the maximum switch time, wherein the ninth frame is used to respond to the eighth frame.

24. The method according to claim 23, wherein the method further comprises:
after duration of a transmission opportunity TXOP of the AP, switching, by the STA, to a second OM.

25. The method according to any one of claims 2 to 24, wherein
the first frame comprises a MAC frame used to carry the first information, and the MAC frame is an acknowledgment ACK control frame, a block acknowledgment BA control frame, or a management frame.

26. The method according to claim 25, wherein the MAC frame comprises a switch token field; and
the switch token field is used to identify the first frame that is used to respond to the second information in the third frame.

27. The method according to any one of claims 1 to 26, wherein the method further comprises:
sending, by the STA, capabilities information to the AP, wherein the capabilities information indicates that the STA supports an operation mode indication operation initiated by the AP.

28. A communication method, comprising:
receiving, by an access point AP, a first frame from a station STA, wherein the first frame comprises first information, and the first information indicates that the station has switched to a first operation mode OM; and
determining, by the AP based on the first information, that the STA has switched to the first OM.

29. The method according to claim 28, wherein the method further comprises:
sending, by the AP, a third frame to the STA, wherein the third frame comprises second information, and the second information indicates the STA to switch to the first OM.

30. The method according to claim 29, wherein the third frame comprises data of the STA and/or data of a STA other than the STA.

31. The method according to claim 29 or 30, wherein the second information further indicates an identifier of the STA, and/or the second information further indicates one or more of the following operation parameters of the first OM:
a channel bandwidth, a modulation and coding scheme MCS, a number of data spatial streams, or a spatial configuration.

32. The method according to any one of claims 29 to 31, wherein the third frame comprises a first field, the first field carries third information, and the third information indicates that the third frame comprises the second information.

33. The method according to claim 32, wherein the second information is carried in a second field of the third frame, and the third information is carried in a third field of the third frame; and
the second field and/or the third field is a U-SIG field or a UHR-SIG field; or
the second field and/or the third field is located between a U-SIG field and a UHR-SIG field, between a UHR-SIG field and a data field, or between a non-high throughput long training field L-LTF and an ultra-high reliability long training field UHR-LTF.

34. The method according to any one of claims 29 to 33, wherein the third frame further comprises fourth information, the fourth information indicates a number N of pieces of operation mode indication OMI information comprised in the third frame, the second information is one of the N pieces of OMI information, and N is a positive integer.

35. The method according to claim 34, wherein the fourth information is carried in a fourth field of the third frame, and the fourth field may be a U-SIG field or a UHR-SIG field, or the fourth field is located between a U-SIG field and a UHR-SIG field, between a UHR-SIG field and a data field, or between a non-high throughput long training field L-LTF and an ultra-high reliability long training field UHR-LTF.

36. The method according to any one of claims 30 to 35, wherein the receiving, by the AP, the first frame from the STA comprises:
receiving, by the AP, a fourth frame from the STA, wherein the fourth frame is used by the STA to acknowledge switching of an operation mode to the first OM or indicates that the third frame is correctly received; and
receiving, by the AP, the first frame from the STA.

37. The method according to any one of claims 30 to 35, wherein before the receiving, by the AP, the first frame from the STA, the method further comprises:
when the third frame comprises the data of the STA, receiving, by the AP, a fifth frame from the STA, wherein the fifth frame indicates whether the STA successfully receives the data of the STA comprised in the third frame.

38. The method according to any one of claims 29 to 31, wherein the second information is carried in an aggregation control field, and the aggregation control field is located in a frame header of a media access control MAC frame comprised in the third frame.

39. The method according to claim 38, wherein the second information is specifically carried in a UHR OM control subfield and/or an OM control subfield in the aggregation control field.

40. The method according to claim 39, wherein a second subfield in the aggregation control field carries fifth information, and the fifth information indicates that the second subfield is a UHR OM control subfield; and
if the second subfield in the aggregation control field carries sixth information, the aggregation control field carrying the sixth information is an extremely high throughput EHT OM control subfield, and the sixth information indicates that the second subfield is an EHT OM control subfield.

41. The method according to any one of claims 29 to 31, wherein the second information is carried in a first information element, and the first information element is located in a frame body of a MAC frame comprised in the third frame.

42. The method according to any one of claims 38 to 41, wherein the MAC frame is an association response frame, an action frame, or a data frame comprising an aggregation MAC protocol data unit A-MPDU format.

43. The method according to claim 29, wherein the method further comprises:
receiving, by the AP, a sixth frame from the STA, wherein the sixth frame comprises seventh information, and the seventh information indicates maximum switch time for the STA to perform OM switching.

44. The method according to claim 43, wherein the method further comprises:
receiving, by the AP, an acknowledgment frame from the STA, wherein the acknowledgment frame is used to acknowledge that the third frame is received; and
determining, by the AP, that the STA switches to the first OM within the maximum switch time after the acknowledgment frame.

45. The method according to claim 44, wherein the method further comprises:
transmitting, by the AP, a communication frame with a STA other than the STA within the maximum switch time after the acknowledgment frame, wherein the communication frame comprises at least one of a data frame, a management frame, or a control frame.

46. The method according to claim 43, wherein the receiving, by the AP, the first frame from the station STA comprises:
after the maximum switch time after a start moment at which the STA performs OM switching, sending, by the AP, a twelfth frame to the STA, wherein the twelfth frame indicates the STA to feed back an OM state of the STA; and
receiving, by the AP, the first frame from the STA.

47. The method according to claim 43, wherein the method further comprises:
performing, by the AP, clear channel assessment from a start moment at which the STA performs OM switching to an end of the maximum switch time;
when the AP obtains a channel through contention by performing the clear channel assessment, sending, by the AP, a control frame, wherein the control frame indicates a transmission opportunity TXOP of the AP, and the TXOP comprises a time period after the maximum switch time; and
after the end of the maximum switch time in the TXOP, sending, by the AP, the communication frame to the STA in the first OM.

48. The method according to claim 43, wherein the method further comprises:
after a start moment at which the STA performs OM switching before an end of the maximum switch time, sending, by the AP, a communication frame, wherein the communication frame comprises ninth information, and the ninth information indicates that the STA is allowed to preferentially occupy a channel after transmission of the communication frame is completed; and
the receiving, by the AP, the first frame from the station STA comprises:
after transmission of the communication frame is completed, receiving, by the AP, the first frame from the STA.

49. The method according to claim 43, wherein the method further comprises:
sending, by the AP, a seventh frame to the STA, wherein the seventh frame comprises eighth information, and the eighth information indicates the first OM.

50. The method according to claim 49, wherein the seventh information is carried in a second information element, and the second information element is located in a frame body of a MAC frame comprised in the sixth frame; and
the eighth information is carried in a first information element, and the first information element is located in a frame body of a MAC frame comprised in the seventh frame.

51. The method according to claim 50, wherein the frame body of the MAC frame comprised in the seventh frame further comprises the second information element, and the second information element comprises the seventh information.

52. The method according to any one of claims 49 to 51, wherein the method further comprises:
sending, by the AP, an eighth frame to the STA, wherein the eighth frame is used to trigger the STA to switch to the first OM, and the eighth frame is a request to send RTS frame or a multi-user RTS frame; and
receiving, by the AP, a ninth frame from the STA, wherein the ninth frame is used to respond to the eighth frame.

53. The method according to any one of claims 29 to 52, wherein
the first frame comprises a MAC frame used to carry the first information, and the MAC frame is an acknowledgment ACK control frame, a block acknowledgment BA control frame, or a management frame.

54. The method according to claim 53, wherein the MAC frame comprises a switch token field; and
the switch token field is used to identify the first frame that is used to respond to the second information **in** the third frame.

55. The method according to any one of claims 28 to 54, wherein the method further comprises:
receiving, by the AP, capabilities information from the STA, wherein the capabilities information indicates that the STA supports an operation mode indication operation initiated by the AP.

56. A communication apparatus, comprising:
a unit or a module configured to perform the method according to any one of claims 1 to 27; and/or
a unit or a module configured to perform the method according to any one of claims 28 to 55.

57. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 1 to 27 and/or the method according to any one of claims 28 to 55 by using a logic circuit or by executing code instructions.

58. A computer-readable storage medium, wherein the storage medium stores a computer program or instructions, and when the computer program or the instructions are executed by a communication apparatus, the method according to any one of claims 1 to 55 is implemented.
